# EUROPÄISCHE PATENTSCHRIFT

(11) **EP 3 158 220 B1**
(45) Veröffentlichungstag und Bekanntmachung des Hinweises auf die Patenterteilung: **10.08.2022**
(21) Anmeldenummer: 15728865.5
(22) Anmeldetag: 15.06.2015
(51) Int. Cl.: F16F 13/26, F16F 13/10

(54) **HYDROLAGER SOWIE KRAFTFAHRZEUG MIT EINEM DERARTIGEN HYDROLAGER**
HYDRAULIC BEARING AND MOTOR VEHICLE COMPRISING A HYDRAULIC BEARING OF THIS TYPE
PALIER HYDRAULIQUE ET VÉHICULE À MOTEUR ÉQUIPÉ D'UN TEL PALIER HYDRAULIQUE

(30) Priorität: 23.06.2014 DE 102014211954
(43) Veröffentlichungstag der Anmeldung: 26.04.2017
(73) Patentinhaber: ContiTech Vibration Control GmbH, 30165 Hannover (DE)
(72) Erfinder: WERHAHN, Max, 30449 Hannover (DE); GENDERJAHN, Robert, 30625 Hannover (DE); MARIENFELD, Peter, 31608 Marklohe (DE)
(74) Vertreter: Continental Corporation
(86) Internationale Anmeldenummer: PCT/EP2015/063264
(87) Internationale Veröffentlichungsnummer: WO 2015/197391

(56) Entgegenhaltungen:
- EP-A2- 0 819 866
- US-A1- 2004 188 903
- US-A1- 2006 097 587

## Beschreibung

Die Erfindung betrifft ein Hydrolager mit einer Tragfeder, einer von der Tragfeder zumindest teilweise umschlossenen Arbeitskammer, die mit einer Hydraulikflüssigkeit gefüllt ist, einer Steuermembran, die zur Veränderung eines Arbeitskammervolumens der Arbeitskammer ausgebildet ist, einem Aktor zum Auslenken der Steuermembran, wobei der Aktor einen Stator und einen in Längsrichtung des Stators beweglichen Anker umfasst, und wobei der Anker mit der Steuermembran mechanisch verbunden ist.

Darüber hinaus betrifft die Erfindung ein Kraftfahrzeug, das einen Fahrzeugrahmen, einen Motor und ein als Hydrolager ausgebildetes Motorlager umfasst, das eine lagernde Verbindung zwischen dem Motor und dem Fahrzeugrahmen herstellt.

Hydrolager, die auch als Hydrauliklager bezeichnet werden, sind aus dem Stand der Technik bekannt. Ein solches Hydrolager ist z. B. aus dem Dokument US2004/188903 bekannt. Sie dienen zur elastischen Abstützung von Aggregaten, insbesondere von Kraftfahrzeugmotoren. Mit Hilfe derartiger, sich z. B. zwischen einem Motor und einem Chassis eines Kraftfahrzeugs befindenden Hydrolagern soll einerseits verhindert werden, dass sich Motor-Vibrationen auf das Chassis übertragen und andererseits sollen die mit dem Fahrbetrieb gegebenen Erschütterungen des Chassis nicht oder nur gedämpft vom Chassis an den Motor gelangen können. Dabei ist der bekannte Konflikt in der Schwingungsisolation zu beachten, der darin besteht, dass das Lager einerseits möglichst steif sein soll, um hohe Lasten bzw. Lagerkräfte aufnehmen zu können, und andererseits eine weiche Charakteristik aufweisen muss, um entstehende Schwingungen über einen möglichst breiten Frequenzbereich möglichst zu isolieren.

In ihrer Grundversion weisen derartige Hydrauliklager üblicherweise ein Gummielement als Tragfeder auf. Das Gummielement ist oft als Hohl-Konus ausgebildet. Die Tragfeder kann somit eine Mantelwandung der Arbeitskammer bilden. An der oberen, spitzen Stirnseite des Hohl-Konuses ist eine obere Abdeckung vorgesehen, an der ein Anschlusselement zur Befestigung des Motors angebracht ist. Das Anschlusselement ist für gewöhnlich ein Gewindebolzen, der mit dem Motor verschraubt werden kann.

Bei einer Belastung des Hydrolagers wirkt eine Kraft in Längsrichtung des Hydrolagers auf die Tragfeder, so dass sich diese elastisch verformt. Diese Verformung wird auch als Einfedern der Tragfeder bezeichnet. Zu beachten ist in diesem Zusammenhang, dass die Arbeitskammer zumindest teilweise von der Tragfeder umschlossen oder umfasst ist. Deshalb wird die Arbeitskammer durch das Einfedern der Tragfeder verkleinert, womit der Druck in der Arbeitskammer ansteigt, so dass sich die Tragfeder zu ihren Seiten aufblähen kann.

Die Dämpfungseigenschaften solcher Hydrolager sind aufgrund ihrer Bauweise frequenzabhängig. Statische oder quasistatische Belastungen unterhalb einer Frequenz von 5 Hz werden dabei üblicherweise von der Tragfeder aufgenommen, die eine relativ große Steifheit aufweist.

Hochfrequente Schwingungen, also Schwingungen im Frequenzbereich oberhalb von 20 Hz bis beispielsweise 50 Hz, 100 Hz oder 200 Hz, werden aufgrund der Trägheit, Viskosität und Inkompressibilität der Hydraulikflüssigkeit und/oder der hohen Steifigkeit und Trägheit der Tragfeder nur sehr gering gedämpft oder sogar nahezu ungedämpft übertragen. Diese Schwingungen treten zwar im Allgemeinen nur mit kleinen Amplituden auf, sind aber aufgrund ihrer akustischen Wirkung von höherer Bedeutung.

Im Hinblick auf das verbesserte Isolieren solcher Schwingungen werden heute sogenannte aktiv gesteuerte Hydrolager eingesetzt, die jeweils einen Linearaktor, der auch als Linearaktuator bezeichnet wird, aufweisen. Als besonders zweckmäßig haben sich elektromagnetische Linearaktoren herausgestellt, die jeweils einen Stator und einen Anker aufweisen. Der Anker ist dabei beweglich gelagert zu dem Stator ausgebildet, so dass der Anker gegenüber dem Stator in Längsrichtung des Linearaktors ausgelenkt werden kann. Für das Hydrolager ist der Anker mechanisch mit einer Steuermembran verbunden, die vorzugsweise einer stirnseitigen Wandung der Arbeitskammer zugeordnet ist, wobei diese Wandung als Trennwand bezeichnet wird. Die Steuermembran kann durch einen flexiblen Teil der Trennwand gebildet sein. Es ist aber auch möglich, dass die Steuermembran von der Trennwand eingefasst ist und somit als Bestandteil der Trennwand angesehen wird. Die Steuermembran kann in ihrer Normalenrichtung elastisch verformt werden. Indem der Anker mechanisch an die Steuermembran gekoppelt ist, kann die Steuermembran mit dem elektromagnetischen Linearaktor in ihrer Normalenrichtung gesteuert verformt werden. Dabei kann es vorgesehen sein, dass der Anker nicht unmittelbar mit der Steuermembran verbunden ist, sondern dass beispielsweise ein Gelenksmechanismus und/oder ein Ankerstößel vorgesehen sind, die zwischen dem Anker und der Steuermembran angeordnet sind, um Bewegungen und/oder Kräfte vom Anker auf die Steuermembran zu übertragen. Der Gelenkmechanismus und/oder der Ankerstößel sollen deshalb dem Anker zugeordnet sein. Mit dem Verformen der Steuermembran in ihrer Normalenrichtung verändert sich das Hydraulikvolumen der Arbeitskammer, denn die Steuermembran bildet vorzugsweise einen Teil der Trennwand zu der Arbeitskammer. Deshalb dient der elektromagnetische Linearaktor des Hydrolagers auch zur Steuerung oder Veränderung des Arbeitskammervolumens der Arbeitskammer.

Als besonders zweckmäßig haben sich elektromagnetische Linearaktoren herausgestellt. Dabei ist der Anker mittels Membranfedern an dem Stator gelagert befestigt, die sich jeweils an einem oberen Ende des Ankers und einem unteren Ende des Ankers radial zwischen dem Anker und dem Stator erstrecken. Diese Membranfedern stellen sicher, dass der Anker den notwendigen radialen Abstand zu dem Stator aufweist, auch wenn der Anker in Längsrichtung des Stators ausgelenkt wird. Die Membranfedern weisen deshalb eine hohe Steifigkeit in Radialrichtung auf. Vorzugsweise ist der Aufbau eines derartigen elektromagnetischen Linearaktors symmetrisch ausgebildet, so dass der radiale Abstand zwischen dem Anker und dem Stator auch bei einer Auslenkung in Längsrichtung konstant bleibt. Je weiter der Anker in Längsrichtung relativ zu dem Stator ausgelenkt wird, desto stärker werden die Membranfedern in Längsrichtung verbogen. Mit einem Verbiegen ist hier und im Weiteren eine elastische Verformung gemeint. Entsprechend ihrer Federsteifigkeit erhöht sich also eine Rückstellkraft, die den Anker an der Auslenkung hindert. Bevor der Anker also eine Auslenkung erfährt, bedarf es einer bestimmten Bestromung des Stators, um die Rückstellkraft der Membranfedern zu überwinden. Erst wenn die Bestromung des Stators weiter erhöht wird, kann der Anker kraftwirkend auf die Steuermembran einwirken.

Wird das Hydrolager zur Lagerung eines Motors eines Kraftfahrzeuges verwendet, so können Sensoren des Kraftfahrzeugs eingesetzt werden, um die vom Motor ausgehenden Schwingungen in einem möglichst nur sehr gedämpften Maß an einen Innenraum zu übertragen oder die Schwingungen des Motors sogar vollständig zu entkoppeln. Hierzu kann beispielsweise ein Sensor vorgesehen sein, der Schwingungen des Motors oder des Chassis messen kann. Alternativ können auch mehrere Sensoren an unterschiedlichen Orten des Motors und/oder des Chassis vorgesehen sein.

Werden von dem Sensor zur Messung der Schwingungen des Chassis hochfrequente Schwingungen erfasst, kann die Steuermembran von dem Linearaktor synchron ausgelenkt werden. Die Richtung der Auslenkung kann dabei durch die Bauart der Trennwand bzw. der Steuermembran bestimmt sein. Die Schwingungen des Motors verursachen entsprechend hochfrequente Druckschwankungen in der Hydraulikflüssigkeit der Arbeitskammer. Mit der synchronen Auslenkung der Steuermembran werden diese hochfrequenten Druckschwankungen möglichst vollständig ausgeglichen. Bestenfalls kommt es somit zu einer Kompensation, so dass diese hochfrequenten Schwingungen nicht von dem Hydrolager übertragen werden. Entsprechend hochfrequente Schwingungen verursachen deshalb im Innenraum des Kraftfahrzeugs keine oder nur sehr geringe Vibrations- beziehungsweise Geräuschemissionen.

Durch die erläuterte Ansteuerung des elektromagnetischen Linearaktors und des entsprechenden Einwirkens auf die Steuermembran soll also eine Absenkung der dynamischen Federrate des Hydrolagers im Bereich der hochfrequenten Schwingungen bewirkt werden. Mit anderen Worten soll das Hydrolager für hochfrequente Schwingungen "weich" geschaltet werden.

Bei bekannten Hydrolagern zeigt sich ein Nachteil darin, dass elektromagnetische Linearaktoren oftmals nicht die notwendige Leistung und/oder Dynamik aufweisen, um das Hydrolager wie gewünscht auf "weich" zu schalten. Außerdem ist zu beachten, dass für einen Linearaktor in einem Hydrolager nur ein begrenzter Bauraum zur Verfügung steht. Wenn also festgestellt wird, dass die Dynamik eines Linearaktors nicht ausreicht und deshalb gegebenenfalls ein leistungsfähigerer Linearaktor notwendig wäre, kann dies zumeist nicht umgesetzt werden, da der zur Verfügung stehenden Bauraum nicht ausreicht.

In der Praxis wurde außerdem festgestellt, dass bei statischen oder quasistatischen Belastungen große Schwingungsamplituden auftreten, die mittels der Steuermembran bzw. des daran gekoppelten Aktors zumindest einen geringen Maß gedämpft werden können. Um diese Dämpfung noch weiter zu verbessern, wäre es wünschenswert, mit dem Aktor und der daran gekoppelten Steuermembran größere Hubwege auszuführen, um den zuvor genannten großen Schwingungsamplituden besser folgen zu können. Hierbei bestehen bei bekannte Linearaktoren mit dem Aufbau von einem Stator, einem Anker und dazwischen angeordneten Membranfedern jedoch natürliche Grenzen, die durch die Membranfedern maßgeblich bestimmt sind. Denn ab einem bestimmten Hubweg des Ankers müssten die Membranfedern neben ihrer Verbiegung eine große Streckung ausführen, was die bereits erwähnte Rückstellkraft deutlich erhöht. Außerdem ist darauf zu achten, dass die radial über den Anker hinausragenden Membranfedern bei einem großen Hubweg nicht an die Unterseite der Trennwand schlagen. Hierzu wäre also ein entsprechend großer freier Bauraum vorzusehen, der das zuvor genannte Anschlagen sicher verhindert. Aber selbst wenn dieser Bauraum vorgesehen ist, hat die Praxis gezeigt, dass sich eine starke Verbiegung der Membranfedern sehr negativ auf ihre Lebensdauer auswirkt.

Der Erfindung liegt deshalb die Aufgabe zu Grunde, ein Hydrolager mit einem Linearaktor zum Auslenken der Steuermembran des Hydrolagers bereitzustellen, wobei der Linearaktor die zuvor genannten Nachteile überwindet. Insbesondere soll der Linearaktor eine hohe Dynamik aufweisen. Außerdem ist es wünschenswert, dass der Linearaktor große Hubamplituden ausführen kann.

Gemäß einem ersten Aspekt wird die Aufgabe gelöst durch ein Hydrolager mit einer Tragfeder, einer von der Tragfeder zumindest teilweise umschlossenen Arbeitskammer, die mit einer Hydraulikflüssigkeit gefüllt ist, einer Steuermembran, die zur Veränderung eines Arbeitskammervolumens der Arbeitskammer ausgebildet ist, einem Aktor zum Auslenken der Steuermembran, wobei der Aktor einen Stator und einen in Längsrichtung des Stators beweglichen Anker umfasst, der Anker mit der Steuermembran mechanisch verbunden ist, und der Anker mittels einer Gleitlagerung gelagert ist.

Bei dem Aktor handelt es sich um einen elektromagnetischen Linearaktor mit dem zuvor genannten Stator und Anker. Bezüglich einer grundlegenden Wirkungsweise eines elektromagnetischen Linearaktors wird auf die Druckschrift DE 198 39 464 C2 verwiesen. Bei dem elektromagnetischen Linearaktor handelt es sich deshalb vorzugsweise um ein Reluktanz-Linearaktor. Grundsätzlich können jedoch auch andere Linearaktoren zum Einsatz kommen. Die folgenden Erläuterungen zu dem Linearaktor sollen deshalb ohne die Beschränkung der Allgemeinheit auf alle geeigneten Linearaktortypen verstanden werden.

Erfindungsgemäß ist der Anker mittels der Gleitlagerung gelagert. Die Gleitlagerung ermöglicht es also, dass der Anker in Längsrichtung des Stators gleiten kann. Unter der Gleitlagerung kann also auch ein Gleitlager verstanden werden. Anders als bei den aus dem Stand der Technik bekannten Membranfedern zur Lagerung des Ankers sind für eine Gleitlagerung keine von dem Anker radial nach außen tragende Arme notwendig, die an dem Stator befestigt sind. Der Anker kann also einen besonders kleinen Querschnitt aufweisen, ohne dass über seine radial außenseitigen Wandung Elemente hervorragen, die zur Kollision mit anderen Bauteilen des Hydrolagers neigen. Mit anderen Worten sind an dem Anker keine armähnlichen Elemente angebracht, die gegen die Unterseite der Trennwand schlagen und dabei die Hubbewegung des Ankers ungewollt bremsen.

Bei der Gleitlagerung ist darüber hinaus festzuhalten, dass ein Gleitwiderstand unabhängig von der Auslenkung des Ankers in Längsrichtung relativ zum Stator ist. Das bedeutet, dass der Anker auch einen großen Hub ausführen kann, ohne dass es zu proportional erhöhten Reaktionskräften kommt, die ausschließlich vom Anker hervorgerufen werden. Hierbei bleiben zunächst die Kräfte außer Betracht, die als Reaktionskräfte von der Steuermembran ausgehen. Der Aktor mit der Gleitlagerung des Ankers weist deshalb keine auslenkungsabhängige Steifigkeit auf. Somit sind für den Aktor keine Kraftreserven konstruktiv vorzuhalten, um größere Auslenkung des Ankers auszuführen. Deshalb kann ein derartiger Aktor eine besonders kleine Bauform aufweisen.

In der Praxis wurde außerdem festgestellt, dass ein Gleitlager eine höhere Lebensdauer als eine Membranfeder bei einer Verwendung für das Hydrolager aufweist.

Eine bevorzugte Ausgestaltung des Hydrolagers zeichnet sich dadurch aus, dass das Hydrolager eine Ausgleichskammer, eine Trennwand, die zwischen der Arbeitskammer und der Ausgleichskammer angeordnet ist, und einen zwischen der Arbeitskammer und der Ausgleichskammer ausgebildeten Drosselkanal zum Austausch von Hydraulikflüssigkeit aufweist. Das Hydrolager umfasst also neben der Tragfeder einen hydraulischen Dämpfer. Dieser umfasst gemäß der bevorzugten Ausgestaltung mindestens zwei Kammern, nämlich die genannte Arbeitskammer und eine Ausgleichskammer. In Längsrichtung des Hydrolagers ist die Ausgleichskammer für gewöhnlich unterhalb der Arbeitskammer angeordnet. Um die Arbeitskammer und die Ausgleichskammer voneinander zu trennen, ist zwischen der Ausgleichskammer und der Arbeitskammer eine Trennwand angeordnet. Außerdem ist ein zwischen der Arbeitskammer und der Ausgleichkammer ausgebildeter Drosselkanal zum Austausch von Hydraulikflüssigkeit vorgesehen. Vorzugsweise ist der Drosselkanal zumindest abschnittsweise von der Trennwand ausgebildet. Alternativ kann der Drosselkanal auch von der Trennwand getrennt ausgebildet sein. Die Hydraulikflüssigkeit in der Arbeitskammer, der Ausgleichskammer und dem Drosselkanal bildet vorzugsweise das gesamte Hydraulikvolumen des Hydrolagers, sofern in Sonderausführungen nicht weitere Zusatzvolumina vorgesehen sind. Als Hydraulikflüssigkeit wird vorzugsweise ein Gemisch aus Öl und Wasser oder ein Fluid mit Glykol eingesetzt.

Kommt es zu einem Einfedern der Tragfeder wird die Arbeitskammer verkleinert, womit der Druck in der Arbeitskammer ansteigt, so dass ein Teil der Hydraulikflüssigkeit der Arbeitskammer durch den Drosselkanal in die Ausgleichskammer strömt. Der Drosselkanal ist vorzugsweise derart ausgebildet, dass dieser für die strömende Hydraulikflüssigkeit einen Strömungswiderstand darstellt. Das Durchströmen des entsprechend ausgebildeten Drosselkanals erzeugt deshalb Dissipation und somit Dämpfungsarbeit. Die Ausgleichskammer ist bevorzugt mit mindestens einem membranartig verformbaren Wandungsteil, das auch als Rollmembran bezeichnet wird, versehen, so dass der in die Ausgleichskammer einströmende Teil der Hydraulikflüssigkeit aufgenommen werden kann.

Niederfrequente Schwingungen, d.h. Schwingungen mit Frequenzen von ca. 5 bis 20 Hz, die im Allgemeinen mit großen Amplituden auftreten, werden durch das Zusammenwirken der beiden Hydraulikkammern über den Drosselkanal stark gedämpft. Die Dämpfung entsteht dabei mit dem Strömen von zumindest eines Teils der Hydraulikflüssigkeit der Arbeitskammer durch den Drosselkanal in die Ausgleichskammer, und umgekehrt, wobei eine entsprechende Dämpfungsarbeit geleistet wird.

Eine weiter bevorzugte Ausgestaltung des Hydrolagers zeichnet sich dadurch aus, dass die Gleitlagerung zumindest im Wesentlichen frei von ferromagnetischen Material ist. Dies gilt insbesondere für die Teile der Gleitlagerung, die nicht von dem Anker und/oder dem Stator gebildet sind. Indem zumindest die übrigen Teile der Gleitlagerung frei von ferromagnetischen Material sind, können diese auch keinen negativen Einfluss bei einem Auslenken des Ankers relativ zu dem Stator hervorrufen. Insbesondere gehen von nicht ferromagnetischen Materialien keine Rückstellkräfte aus, die auf einer magnetischen Wechselwirkung beruhen. Somit ist ein derartiger Aktor besonders präzise steuerbar.

Eine weitere bevorzugte Ausgestaltung des Hydrolagers zeichnet sich dadurch aus, dass die Gleitlagerung zur Aufnahme von Kräften in Querrichtung des Aktors ausgebildet ist. Zwischen dem Anker und dem Stator können somit Kräfte in Querrichtung übertragen werden. Dies gewährleistet eine präzise Einhaltung eines Abstands zwischen dem Anker und dem Stator, der insbesondere für eine reibungsfreie Bewegung des Ankers und/oder die magnetische Wechselwirkung zwischen dem Anker und dem Stator bei elektromagnetischen Aktoren relevant ist.

Eine weitere bevorzugte Ausgestaltung des Hydrolagers zeichnet sich dadurch aus, dass der Anker mittels der Gleitlagerung in Längsrichtung des Aktors beweglich gelagert ist. Der Anker kann deshalb in Längsrichtung zu dem Stator bewegt bzw. verfahren werden, um die Steuermembran auszulenken. Die Gleitlagerung kann dazu ausgelegt sein, neben dem Freiheitsgrad in der genannten Längsrichtung keine weiteren Freiheitsgrade aufzuweisen.

Eine weitere bevorzugte Ausgestaltung des Hydrolagers zeichnet sich dadurch aus, dass die Gleitlagerung im Übergang von einem dem Anker zugeordneten Ankerstößel und einem Hydrolagergehäuse des Hydrolagers ausgebildet ist. Das Hydrolagergehäuse ist vorzugsweise mit der Trennwand mechanisch verbunden. Besonders bevorzugt ist das Hydrolagergehäuse zu der von der Arbeitskammer abgewandten Seite der Trennwand angeordnet. Der Aktor bzw. der Stator des Aktors kann deshalb in das Hydrolagergehäuse eingesetzt und/oder mit dem Hydrolagergehäuse mechanisch verbunden sein. Aufgrund der mechanischen Verbindung des Hydrolagergehäuses mit dem Stator kann es zweckmäßig sein, die die Gleitlagerung im Übergang von dem Anker zu dem Hydrolagergehäuse auszubilden. Denn das Hydrolagergehäuse weist vorzugsweise eine hohe Formstabilität auf, so dass vom Anker ausgehende Querkräfte besonders gut aufgenommen werden können. Außerdem kann der Bauraum auf diese Weise besonders gut ausgenutzt werden. Als vorteilhaft hat es sich erwiesen, die Gleitlagerung im Bereich des dem Anker zugeordneten Ankerstößels auszubilden, um den übrigen Teil des Ankers möglichst klein auszubilden, so dass eine kompakte Bauform des Aktors möglich ist.

Eine weitere bevorzugte Ausgestaltung des Hydrolagers zeichnet sich dadurch aus, dass die Gleitlagerung im Übergang vom Anker zum Stator, insbesondere dessen Statorgehäuse, ausgebildet ist. Diese Ausgestaltung bietet den Vorteil, dass die zwischen dem Anker und dem Stator wirkenden Kräfte in Querrichtung, die vorzugsweise durch eine elektromagnetische Wechselwirkung zwischen dem Anker und dem Stator entstehen können, in unmittelbarer Nähe zu ihrer Entstehung übertragen werden. Auf den Anker wirken sodann besonders geringe Biegemomente, was ein besonders sicheres Betriebsverhalten gewährleistet. Weist der Stator ein Statorgehäuse auf, können die Kräfte zwischen dem Anker und dem Statorgehäuse übertragen werden, ohne dass es zu deutlich größeren Biegemomenten kommt. Deshalb ist diese Ausgestaltung durch ihr sicheres Betriebsverhalten gekennzeichnet.

Eine weitere bevorzugte Ausgestaltung des Hydrolagers zeichnet sich dadurch aus, dass dem Anker eine Lagerfläche der Gleitlagerung und dem Stator oder dem Hydrolagergehäuse eine Lagergegenfläche der Gleitlagerung zugeordnet sind. Mit der Lagerfläche der Gleitlagerung gleitet der Anker auf der Lagergegenfläche der Gleitlagerung. Ist die Lagergegenfläche dem Stator zugeordnet oder von diesem gebildet, kann der Anker unmittelbar auf dem Stator gleiten, so dass sich hierdurch die Gleitlagerung ausbildet. Alternativ kann es vorgesehen sein, dass die Gegenlagerfläche dem Hydrolagergehäuse oder dem Statorgehäuse zugeordnet ist oder von den zuvor genannten Gehäusen jeweils gebildet ist. In diesem Fall kann der Anker unmittelbar auf dem Hydrolagergehäuse bzw. auf dem Statorgehäuse gleiten. Alle zuvor genannten Alternativen bieten den Vorteil, dass die Gleitlagerung in die vorhandenen Bauteile des Hydrolagers integrierbar ist, so dass das Hydrolager keinen weiteren Bauraum benötigt.

Eine weitere bevorzugte Ausgestaltung des Hydrolagers zeichnet sich dadurch aus, dass die Lagerfläche von einer zylindrischen Hülse des Ankers und die Gegenlagerfläche von einem zylindrischen Führungsbolzen des Stators oder des Hydrolagergehäuses gebildet werden, oder umgekehrt. Die Hülse und der Führungsbolzen können jeweils besonders präzise und/oder aus hochfesten Material hergestellt sein, so dass die Lagerfläche und die Gegenlagerfläche eine besonders präzise bzw. langlebige Gleitlagerungführung für das Hydrolager bilden. Besonders bevorzugt kann die Hülse in eine unterseitige Bohrung, insbesondere Mittelbohrung, des Ankers eingepresst sein. Der Führungsbolzen kann an dem Hydrolagergehäuse oder an dem Stator, insbesondere dessen Statorgehäuse, befestigt sein. Somit lässt sich eine besonders genaue Ausrichtung des Ankers zu dem Stator, insbesondere in Querrichtung des Stators, erreichen.

Eine weitere bevorzugte Ausgestaltung des Hydrolagers zeichnet sich dadurch aus, dass zwischen einer Ankerpolfläche des Ankers und einer Statorpolfläche des Stators ein Spalt ist, in den ein Gleitelement der Gleitlagerung eingebracht ist. Mittels des Gleitelements können Kräfte zwischen der Ankerpolfläche und der Statorpolfläche in Querrichtung übertragen und zugleich eine relative Bewegung des Ankers in Längsrichtung des Stators gewährleistet werden, ohne dass es zu einer Abnutzung der Polflächen kommt. Außerdem bietet eine derartige Ausgestaltung der Gleitlagerung eine lange Lebensdauer, da der Anker und der Stator nicht unmittelbar zueinander in Kontakt sind. Mittels des Gleitelements kann darüber hinaus der Abstand zwischen dem Anker und dem Stator besonders präzise eingestellt werden. Das Gleitelement kann als PTFE-Gleitelement ausgestaltet sein. Besonders bevorzugt ist das Gleitelement in Querrichtung Q mehrschichtig ausgestaltet, wobei mindestens eine Schicht, insbesondere die dem Anker zugewandte, äußere Schicht, als eine PTFE-Schicht ausgestaltet ist.

Eine weitere bevorzugte Ausgestaltung des Hydrolagers zeichnet sich dadurch aus, dass die Gleitlagerung von der Arbeitskammer zumindest teilweise umschlossen ist. Wie eingangs erläutert, ist die Arbeitskammer zumindest teilweise von der Tragfeder umschlossen. Insbesondere stellt die Tragfeder eine mantelseitige Wandung der Arbeitskammer dar, die bei Schwingungen des Hydrolagers gestaucht oder gedehnt wird. Der Kern der Arbeitskammer bleibt somit von diesen Veränderungen der Mantelwandung unbeeinflusst. Deshalb kann die Gleitlagerung vorzugsweise im Kern der Arbeitskammer angeordnet sein. Die Arbeitskammer und die Ausgleichskammer sind durch die Trennwand getrennt. Die Anordnung der Gleitlagerung auf der der Arbeitskammer zugewandten Seite bietet deshalb die Möglichkeit, die Gleitlagerung in die Arbeitskammer zu integrieren. Dies hat sich in der Praxis insbesondere dann als vorteilhaft erwiesen, wenn die Steuermembran ebenfalls zu der der Arbeitskammer zugewandten Seite der Trennwand angeordnet ist. Dabei kann die Steuermembran zwischen einem Steuerkanal und einer Druckkammer angeordnet sein, wobei der Steuerkanal mit dem von der Steuermembran abgewandten Ende mit der Arbeitskammer verbunden ist. Eine derartige Anordnung der Steuermembran wird oftmals auch als invertiertes Wirkprinzip für ein Hydrolager bezeichnet. Die Steuermembran ist sodann mittels des Ankerstößels mit dem Anker verbunden, so dass die Gleitlagerung für den Anker ebenfalls in unmittelbarer Nähe zu der Steuermembran angeordnet sein kann. Zusammenfassend können in den Kern der Arbeitskammer somit zumindest die Druckkammer, die Steuermembran und die Gleitlagerung eingebracht sein, ohne dass es die Grundfunktion des Hydrolagers negativ beeinflusst. Vielmehr wird damit ein kompakter Aufbau des Hydrolagers geschaffen.

Eine weitere bevorzugte Ausgestaltung des Hydrolagers zeichnet sich dadurch aus, dass der Anker an einer zugehörigen, dem Stator zugewandten Seite eine Lagerfläche der Gleitlagerung bildet, und an einer dem Anker zugewandten Statorseite ein Gleitelement der Gleitlagerung befestigt ist, das mit einer zugehörigen, dem Anker zugewandten Seite eine Gegenlagerfläche der Gleitlagerung bildet. Mit der Seite des Ankers bzw. mit der Seite des Stators sind jeweils zugehörige äußere Seiten gemeint. Für die Lagerung des Ankers liegt der Anker mit der Lagerfläche in Längsrichtung begleitend beweglich an der Gegenlagerfläche an. Die Gegenlagerfläche wird von dem Gleitelement gebildet, so dass das Gleitelement zur Übertragung von Kräften in Querrichtung des Aktors ausgebildet ist. Um auch bei einer Auslenkung des Ankers in Längsrichtung eine gute Lagerung zu gewährleisten, ist das Gleitelement an dem Stator befestigt. Damit ergibt sich eine ortsfeste Anordnung des Gleitelements an dem Stator, was die konstruktive Auslegung erleichtert und die Lebensdauer des Aktors vergrößert. Denn durch die Befestigung des Gleitelements an dem Stator kann ein unbeabsichtigtes Verrutschen des Gleitelements sicher verhindert werden.

Eine weitere bevorzugte Ausgestaltung des Hydrolagers zeichnet sich dadurch aus, dass der Stator ein Leitelement aus ferromagnetischem Material aufweist, und das Leitelement einen sich in Längsrichtung des Linearaktors erstreckenden Längsabschnitt, einen sich in Querrichtung des Linearaktors erstreckenden, unteren Kragen und einen sich in Querrichtung des Linearaktors erstreckenden, oberen Kragen aufweist, der untere Kragen von dem oberen Kragen in Längsrichtung beabstandet ist, wobei der untere Kragen und der obere Kragen jeweils an einer dem Anker zugewandten Seite eine Statorpolfläche bilden, und das Gleitelement in Längsrichtung des Linearaktors zwischen dem oberen Kragen und dem unteren Kragen angeordnet ist. Gemäß dieser Ausgestaltung weist der Stator also ein Leitelement aus ferromagnetischem Material auf. Dieses Leitelement dient zum Bündeln, Leiten und/oder Lenken eines Magnetfeldes. Dies wird vorzugsweise von einer Spule und/oder einem Permanentmagneten hervorgerufen, die dem Stator zugeordnet sein können. Unter der Spule ist eine elektromagnetische Spule mit mindestens einer, vorzugsweise mehreren Windungen zu verstehen. Grundsätzlich kann sich der Längsabschnitt in Längsrichtung über die Kragen hinaus erstrecken. Es ist jedoch bevorzugt, dass der Längsabschnitt in Längsrichtung mit dem jeweiligen Kragen endet. Somit ist das Leitelement im Querschnitt vorzugsweise C-förmig oder kammförmig ausgebildet. Es eignet sich deshalb dazu, den mindestens einen, bevorzugten Permanentmagneten und/oder die mindestens eine, bevorzugte Spule zu übergreifen. Dies gilt vorzugsweise auch für das Gleitelement. Um die jeweiligen, von dem oberen Kragen und unteren Kragen gebildeten Enden des Leitelements für ein Magnetfeld zu schließen, kann der Anker ebenfalls zum Bündeln, Leiten und/oder Lenken eines Magnetfeldes ausgebildet sein und sich in Längsrichtung von dem oberen Kragen zu dem unteren Kragen erstrecken. Vorzugsweise weist der Anker ferromagnetisches Material auf. Unter der Längsrichtung ist hier ebenfalls die Längsrichtung des Linearaktors zu verstehen. In einer bevorzugten Weiterbildung wird der Anker bei einer Bestromung der mindestens einen Spule des Stators in Längsrichtung in einen Hohlraum des Stators gezogen. Für die Ausgestaltung des Leitelements mit Kragen ist die Zugbewegung des Ankers auf eine konstruktive Überlagerung des von der mindestens einen Spule verursachten Spulenmagnetfelds und des Permanentmagnetfelds am oberen Kragen und einer destruktiven Überlagerung des Spulenmagnetfelds und des Permanentmagnetfelds am unteren Kragen zurückzuführen, oder umgekehrt.

Um eine gute Beweglichkeit des Ankers gegenüber dem Stator zu gewährleisten, ist bevorzugt zwischen den Statorpolflächen des Stators und den Ankerpolflächen des Ankers ein Spalt, insbesondere ein Luftspalt, vorgesehen. Sofern der Stator ringförmig ausgebildet und der Anker in den zylindrischen Hohlraum des ringförmigen Stators eingebracht ist, kann der Spalt bzw. Luftspalt ebenfalls ringförmig ausgebildet sein. Die Statorpolflächen werden von dem Anker zugewandten Seiten der Kragen gebildet. Sie ragen vorzugsweise in Richtung des Ankers über den Längsabschnitt des Leitelements hinaus. Die Ankerpolflächen können an einer dem Stator zugewandten Seite des Ankers ausgebildet sein. Vorzugsweise ist zu jeder Statorpolfläche eine gegenüber angeordnete Ankerpolfläche vorgesehen. Dies gilt insbesondere für einen Ruhezustand des Linearaktors.

Als besonders vorteilhaft hat es sich weiterhin erwiesen, ein Gleitelement für die Gleitlagerung vorzusehen, wobei das Gleitelement in Längsrichtung des Linearaktors zwischen dem oberen Kragen und dem unteren Kragen angeordnet ist. Das Gleitelement dient also zur Übertragung von Kräften in Querrichtung, die zwischen dem Stator und dem Anker wirken können. In dem das Gleitelement zwischen dem oberen Kragen und dem unteren Kragen angeordnet ist, grenzt das Gleitelement in Längsrichtung allenfalls bis an den oberen Kragen bzw. den unteren Kragen an. Das Gleitelement erstreckt sich jedoch in Längsrichtung nicht darüber hinaus. Mit anderen Worten werden die von den beiden Kragen gebildeten Statorpolflächen nicht von dem Gleitelement bedeckt. Um die zwischen dem Anker und dem Stator in Querrichtung wirkenden Kräfte übertragen zu können, hat es sich in der Praxis gezeigt, dass das Gleitelement eine bestimmte, sich in Querrichtung erstreckende Gleitelementbreite bzw. Gleitelementdicke aufweisen sollte, um eine ausreichende strukturelle Stabilität zu erreichen. Indem das Gleitelement sich in Längsrichtung nicht bis über die Kragen erstreckt, wird ein Abstand zwischen dem Anker und den von den Kragen gebildeten Statorpolflächen nicht durch die Gleitelementbreite bestimmt. Denn bei einer C-förmigen Ausgestaltung kann das Gleitelement zumindest teilweise übergriffen werden. Somit erlaubt diese Ausgestaltung des Aktors einen Abstand zwischen dem Anker und den Statorpolflächen zumindest im Wesentlichen frei von der Gleitelementbreite und deshalb besonders klein auszugestalten. Ein besonders kleiner Abstand zwischen den Statorpolflächen und dem Anker reduziert einen zugehörigen, magnetischen Widerstand zwischen den Statorpolflächen und dem Anker, was die Leistungsfähigkeit des Aktors bzw. die Kompaktheit des Aktors steigert.

Eine weitere bevorzugte Ausgestaltung des Hydrolagers zeichnet sich dadurch aus, dass das Gleitelement zwischen dem unteren Kragen und dem oberen Kragen in den Stator einfasst. Der Stator kann also zwischen dem unteren Kragen und dem oberen Kragen eine Vertiefung aufweisen, in die das Gleitelement eingesetzt und sodann an dem Stator befestigt ist. Dies erlaubt eine formschlüssige und kraftschlüssige Verbindung zwischen dem Gleitelement und dem Stator. Eine derartige Ausgestaltung ist besonders robust und langlebig. Darüber hinaus kann das Gleitelement eine ausreichende Gleitelementbreite bzw. Gleitelementdicke aufweisen, die für die mechanische Stabilität des Gleitelements von Vorteil ist, ohne dass dies zu einem weiten Herausragen des Gleitelements aus dem Stator führen muss. Außerdem bietet diese Ausgestaltung die Möglichkeit, den Abstand zwischen dem Anker und den Statorpolflächen weitestgehend unabhängig von der Gleitelementbreite konstruktiv auszugestalteten.

Eine weitere bevorzugte Ausgestaltung des Hydrolagers zeichnet sich dadurch aus, dass das Gleitelement in Querrichtung über die von den Kragen gebildeten Statorpolfächen hinausragt. Grundsätzlich könnte die zuvor genannte Vertiefung derart ausgestaltet sein, um das Gleitelement vollständig aufzunehmen. In diesem Fall besteht jedoch die Gefahr, dass der Anker in mechanischen Kontakt mit den Kragen bzw. den Statorpolflächen kommt, was zu einer starken mechanischen Reibung führen kann. Diese mechanische Reibung ist jedoch zu vermeiden, um auch über eine längere Betriebsdauer ein gleichmäßiges Betriebsverhalten des Aktors zu erreichen. Bevorzugt ist das Gleitelement deshalb derart an dem Stator befestigt und/oder in eine Vertiefung zwischen den Kragen eingesetzt, dass das Gleitelement in Querrichtung über die von den Kragen gebildeten Statorpolflächen hinausragt. Bevorzugt bildet der Anker mit einer dem Gleitelement zugewandten Seite eine Lagerfläche und das Gleitelement mit einer dem Anker zugewandten Seite eine Gegenlagerfläche, wobei die Lagerfläche in Längsrichtung gleitend beweglich auf der Gegenlagerfläche anliegt. Durch das Hinausragen des Gleitelements über die Kragen des Stators kann der Anker kontaktlos über die Kragen bzw. die Statorpolflächen gleiten. Dies gewährleistet eine besonders hohe Lebensdauer des Aktors. Darüber hinaus kann der Abstand zwischen dem Anker und den Statorpolflächen durch eine Höhe bestimmt sein, mit der das Gleitelement die Kragen in Querrichtung überragt. Mit anderen Worten kann durch die konstruktive Ausgestaltung des Gleitelements der zuvor genannte Abstand zwischen dem Anker und den Statorpolflächen konstruktiv bestimmt werden. Da sich das Gleitelement nicht über die Statorpolflächen überdeckend erstreckt, entsteht zwischen den Statorpolflächen und dem Anker ein Spalt. Dies ist vorzugsweise ein Luftspalt.

Eine weitere bevorzugte Ausgestaltung des Hydrolagers zeichnet sich dadurch aus, dass der Stator mindestens einen Permanentmagneten und mindestens eine Spule aufweist, das Leitelement den mindestens einen Permanentmagneten und/oder die mindestens eine Spule übergreift, und der Anker in Längsrichtung ein Joch aus ferromagnetischem Material für das Leitelement bildet. Um also die jeweiligen Enden des Leitelements für ein Magnetfeld zu schließen, ist der Anker aus ferromagnetischen Material und in Längsrichtung als Joch für das Leitelement ausgebildet. Unter der Längsrichtung ist hier ebenfalls die Längsrichtung des Aktors zu verstehen. Indem der Anker als Joch in Längsrichtung ausbildet ist, bleibt der zuvor genannte Spalt bzw. Luftspalt auch bei einer Bewegung des Ankers in Längsrichtung konstant. Der Anker kann also einen zumindest im Wesentlichen konstanten Abstand in Querrichtung zu den Statorpolflächen aufrechterhalten. Somit weist der Aktor ein besonders lineares Übertragungsverhalten auf, was eine einfache Steuerbarkeit gewährleistet.

Ohne die mindestens eine Spule des Stators zu bestromen, ruft nur der mindestens eine Permanentmagnet ein Permanentmagnetfeld hervor, das auf das Leitelement und das vom Anker gebildete Joch wirkt. Es bilden sich statische Magnetfeldlinien aus. Das Permanentmagnetfeld des mindestens einen Permanentmagneten ist vorzugsweise in Querrichtung, also in einer Richtung quer zur Längsrichtung, ausgerichtet. Sofern die Spulen nicht bestromt werden, entsteht auch ein statischer, magnetischer Zustand des Aktors, wobei der Anker eine bestimmte Ruheposition annimmt.

Bei einer Bestromung der mindestens einen Spule des Stators wird der Anker in Längsrichtung in den Hohlraum des Stators gezogen. Die Zugbewegung des Ankers ist auf eine konstruktive Überlagerung des von der mindestens einen Spule verursachten Spulenmagnetfelds und des Permanentmagnetfelds in einem oberen Abschnitt des Leitelements, insbesondere dem oberen Kragen, und einer destruktiven Überlagerung des Spulenmagnetfelds und des Permanentmagnetfelds in einem unteren Abschnitt des Leitelements, insbesondere dem unteren Kragen, zurückzuführen. Die konstruktive und destruktive Überlagerung kann auch in umgekehrter Weise erfolgen, wenn der Strom beispielsweise in umgekehrter Richtung fließt. In diesem Fall käme es nicht zu einer Zugbewegung sondern zu einer entgegengesetzten Bewegungsrichtung des Ankers.

Die Kraftwirkung ist also darauf zurückzuführen, dass der Anker in Längsrichtung ein Joch aus oder mit ferromagnetischen Material für das Leitelement ausbildet und das Spulenmagnetfeld von dem Permanentmagnetfeld an dem oberen Abschnitt des Leitelements geschwächt und an dem unteren Abschnitt des Leitelements gestärkt wird, oder umgekehrt. Ein entsprechender Effekt kann auch mit mehreren Permanentmagneten erreicht werden. Ist beispielsweise ein erster und ein zweiter Permanentmagnet vorgesehen, wobei die beiden Permanentmagneten in Längsrichtung voneinander beabstandet sind und die mindestens eine Spule in Längsrichtung zwischen den beiden Permanentmagneten, insbesondere mit einer Überlagerung in Längsrichtung, angeordnet ist, können die beiden Permanentmagneten jeweils wesentlich für die konstruktive beziehungsweise destruktive Überlagerung der Magnetfelder verantwortlich sein.

Ein besonderer Vorteil des erfindungsgemäßen elektromagnetischen Aktors bzw. Linearaktors, dessen Stator sowohl den mindestens einen Permanentmagneten als auch die mindestens eine Spule aufweist, besteht in der Reduzierung des Ankermasse bzw. des Gewichts des Ankers. Gegenüber bekannten Ausgestaltungen eines Linearaktors nach dem Reluktanzprinzip, deren Anker entweder den mindestens einen Permanentmagneten oder die mindestens eine Spule trägt, ist der erfindungs gemäße Anker von dieser Last befreit. Denn der erfindungsgemäße Anker ist in Längsrichtung als Joch aus oder mit ferromagnetischen Material für das Leitelement ausgebildet. Betrug der Anteil der Ankermasse an der Gesamtmasse des Linearaktors bei bekannten Ausgestaltungen oftmals etwa 50 %, so kann die Ankermasse des erfindungsgemäßen Linearaktors auf ca. 15 % der Gesamtmasse des Linearaktors reduziert werden. Die Kraft des Linearaktors bleibt trotz Reduzierung der Ankermasse erhalten. Durch die Verlagerung sinkt außerdem das statische Magnetfeld im Anker ab und die Überlagerung der Magnetfelder findet größtenteils in den Kragen des Leitelements statt. Somit kann eine Wandstärke des Ankers, also seine Erstreckung in Querrichtung, besonders klein gehalten werden, ohne eine magnetische Sättigung zu fürchten. Deshalb kann die Wandstärke oder der Durchmesser des Ankers so weit reduziert werden, bis sich das ferromagnetische Material des Ankers bei einer vollen Bestromung der mindestens einen Spule wieder nahe der Sättigung befindet.

Mit der Reduzierung der Ankermasse verringert sich auch die schwingende Masse des Hydrolagers bzw. des Motorlagers, was zu einem Anstieg der ersten Systemeigenfrequenz des Hydrolagers oder des Motorlagers führt. Korrespondierend erhöht sich die unterste Frequenz, bei der Resonanz auftritt.

Eine weitere bevorzugte Ausgestaltung des Aktors des Hydrolagers zeichnet sich dadurch aus, dass der mindestens eine Permanentmagnet benachbart zu mindestens einem der Kragen angeordnet ist. Die damit bestimmte Nähe zwischen dem mindestens einen Permanentmagneten und dem mindestens einen Kragen stellt sicher, dass das Permanentmagnetfeld ein Spulenmagnetfeld beeinflusst. Besonders bevorzugt ist der mindestens eine Permanentmagnet unmittelbar benachbart zu dem mindestens einen Kragen angeordnet. Es entsteht deshalb die gewünschte konstruktive oder destruktive Überlagerung der Magnetfelder, so dass der Anker durch Bestromung der mindestens einen Spule in Längsrichtung gesteuert bewegt werden kann. Insbesondere sind zwei Permanentmagneten, und zwar ein oberer Permanentmagnet und ein unterer Permanentmagnet, vorgesehen, wobei der obere Permanentmagnet zu dem oberen Kragen benachbart angeordnet ist und der untere Permanentmagnet zu dem unteren Kragen benachbart angeordnet ist. Alternativ ist mindestens ein Permanentmagnet besonders bevorzugt vorgesehen, der sich in Längsrichtung von dem oberen Kragen bis zu dem unteren Kragen erstreckt. Dies führt sodann zu einem entsprechenden Effekt der konstruktiven bzw. destruktiven Überlagerung der Magnetfelder.

Eine weitere bevorzugte Ausgestaltung des Aktors des Hydrolagers zeichnet sich dadurch aus, dass jeder der Kragen den Längsabschnitt in gleicher Querrichtung überragt, wobei der mindestens eine Permanentmagnet und/oder die mindestens eine Spule zwischen den Kragen angeordnet ist bzw. sind. Die Querrichtung ist quer zur Längsrichtung ausgebildet. Die beiden Kragen und der Längsabschnitt können deshalb im Querschnitt C-förmig oder kammförmig zueinander angeordnet sein. Die Öffnung dieser C-Form bzw. Kammform zeigt dabei bevorzugt zu dem Anker. In Längsrichtung zwischen dem oberen Kragen und dem unteren Kragen bildet sich vorzugsweise ein Aufnahmebereich aus, in den der mindestens eine Permanentmagnet und/oder die mindestens eine Spule eingesetzt sind. Somit können die Kragen, der mindestens eine Permanentmagnet und die mindestens eine Spule in Längsrichtung oder in Querrichtung hintereinander angeordnet sein. In den dem Aktor zugewandten Endabschnitt des Aufnahmebereichs des Stators kann außerdem das Gleitelement einfassen. Indem der Anker als Joch für das Leitelement ausgebildet ist, wird ein von der Spule verursachtes Spulenmagnetfeld durch das Leitelement und den Anker ringförmig gebündelt. Durch diese Ausgestaltung des Hydrolagers können besonders hohe Kräfte des zugehörigen Aktors gewährleistet werden.

Eine weitere bevorzugte Ausgestaltung des Aktors des Hydrolagers zeichnet sich dadurch aus, dass der mindestens eine Permanentmagnet und die mindestens eine Spule in Querrichtung hintereinander angeordnet sind. Der Linearaktor weist deshalb eine besonders geringe Höhe - also eine Erstreckung des Aktors in Längsrichtung - auf. Ein derartiger Linearaktor bietet sich vorteilhaft an, um in besonders kleinen Bauräumen, beispielsweise im Vorderwagen eines Kraftfahrzeugs, verwendet zu werden.

Eine weitere bevorzugte Ausgestaltung des Aktors des Hydrolagers zeichnet sich dadurch aus, dass der Anker frei von Permanentmagneten und Spulen ist. Der Anker kann deshalb besonders leicht und/oder klein ausgebildet sein. Das Magnetfeld des Aktors wird außerdem ausschließlich von dem Stator verursacht. Wird das Hydrolager in dieser Ausgestaltung des Aktors mit hochfrequenten Schwingungen beaufschlagt, wirken diese über die Steuermembran auf den Anker, der aufgrund seiner verringerten Masse einer derartigen hochfrequenten Schwingung folgen kann. Das Hydrolager in einer derartigen Ausbildung eignet sich deshalb besonders gut zur Isolation von hochfrequenten Schwingungen.

Eine weitere bevorzugte Ausgestaltung des Hydrolagers zeichnet sich dadurch aus, dass die Lagerfläche der Gleitlagerung und für das Joch vorgesehene Ankerpolflächen an einer gemeinsamen, ununterbrochenen Ankerseite ausgebildet sind. Ein Übergang von der Lagerfläche zu einer der Ankerpolflächen ist deshalb stetig. Besonders bevorzugt sind die Lagerfläche und die Ankerpolflächen in einer Flucht zueinander ausgerichtet. Sie können also in einer gemeinsamen Ebene angeordnet sein oder eine gemeinsame, zylindrische Fläche bilden. Der Vorteil dieser Ausgestaltung zeigt sich insbesondere dann, wenn der Anker in Längsrichtung ausgelenkt wird. Dabei soll beispielhaft berücksichtigt werden, dass sich das Gleitelement von dem oberen Kragen bis zu dem unteren Kragen erstreckt und in Querrichtung über die Kragen in Richtung des Ankers hervorragt. Im Ruhezustand des Aktors liegt der Anker mit der Lagerfläche an der von dem Gleitelement gebildeten Gegenlagerfläche an. Vorzugsweise grenzt in Längsrichtung oberhalb der Gegenlagerfläche sowie in Längsrichtung unterhalb der Gegenlagerfläche jeweils eine Ankerpolfläche an. Indem die Gegenlagerfläche und die Ankerpolflächen ununterbrochen ineinander übergehen, wird ein Auslenken des Ankers in Längsrichtung nicht von den Ankerpolflächen gehindert. Vielmehr kann es zu einer Art Neuaufteilung der Seite des Ankers kommen, an der die Gegenlagerfläche und die Ankerpolflächen von dem Anker gebildet sind. Wird der Anker beispielsweise in Längsrichtung nach oben ausgelenkt, erfolgt eine relative Verschiebung der Gegenlagerfläche in Längsrichtung nach unten an der zuvor genannten Seite des Ankers. Wo zuvor an einem unteren Abschnitt des Ankers noch eine ausschließlich als Ankerpolfläche ausgebildete Fläche an der genannten Seite des Ankers gebildet war, liegt nunmehr auch das Gleitelement an dem Anker an. Auch hier können sodann Kräfte in Querrichtung übertragen werden, was die Ausrichtung des Ankers relativ zum Stator weiterhin gewährleistet. Somit können die Gegenlagerfläche und die Ankerpolflächen jeweils eine Doppelfunktion aufweisen, zumindest abschnittsweise, wenn der Anker in Längsrichtung ausgelenkt wird. Eine besonders einfache Ausgestaltung des Ankers, der an einer Seite sowohl eine Lagerfläche als auch Ankerpolflächen in einer gemeinsamen Flucht aufweist, kann beispielsweise als ein einstückiger Anker aus oder mit einem ferromagnetischen Material ausgestaltet sein. Weiter bevorzugt kann dies insbesondere für den Abschnitt des Ankers gelten, der zumindest in der Ruhestellung gegenüberliegend zu dem Stator ist. So kann der Anker bzw. der zugehörige Abschnitt beispielsweise als ein hohlzylindrisches Bauteil aus oder mit einem ferromagnetischen Material mit einer zylindrischen, radial außenseitigen Mantelfläche ausgestaltet sein. Diese Mantelfläche bildet sodann sowohl die Gegenlagerfläche als auch die Ankerpolflächen aus. Eine derartige zylindrische Mantelfläche weist keine Hinterschneidungen oder sonstige unstetige Übergänge auf. Besonders bevorzugt weist der Anker an der Gegenlagerflächen und den Ankerpolflächen eine zumindest im Wesentlichen gleiche Oberflächenrauheit auf. Diese ist vorzugsweise sehr klein. So können die genannten Oberflächen poliert ausgestaltet sein. Somit kann der Anker mit einer besonders geringen Reibung in Längsrichtung ausgelenkt werden, wobei die zylindrische Mantelfläche des Ankers an dem Gleitelement in Längsrichtung gleiten kann.

Eine weitere bevorzugte Ausgestaltung des Aktors des Hydrolagers zeichnet sich dadurch aus, dass die Statorpolflächen und die Ankerpolflächen in Querrichtung durch einen Spalt voneinander beabstandet sind, wobei eine Spaltbreite kleiner als eine Gleitelementbreite ist. Die Spaltbreite ist der Abstand in Querrichtung zwischen einer Statorpolfläche und einer in Querrichtung gegenüber angeordneten Ankerpolfläche. Die Gleitelementbreite ist die Erstreckung des Gleitelements in Querrichtung. Das Gleitelement ist vorzugsweise in eine Vertiefung bzw. einen Aufnahmeraum zwischen den Kragen des Stators eingesetzt. Dabei ist es weiterhin bevorzugt vorgesehen, dass das Gleitelement die Kragen in Querrichtung zum Anker hin überragt. Die Höhe, mit der das Gleitelement die Kragen überragt, hängt also davon ab, wie tief das Gleitelement in die Vertiefung eingesetzt ist. Somit kann die Tiefe der Vertiefung konstruktiv auch die Höhe bestimmen, mit der das Gleitelement die Kragen überragt. Der Anker liegt mit der Lagerfläche an der Gegenlagerfläche des Gleitelements an. Somit bestimmt die zuvor genannte Höhe auch die Spaltbreite. Die genannte Höhe und folglich auch die Spaltbreite sind jeweils kleiner als die Gleitelementbreite. Somit kann die Gleitelementbreite derart ausgestaltet sein, dass das Gleitelement eine vorteilhafte strukturelle Stabilität aufweist. Die sich daraus ergebende Spaltbreite erhöht jedoch nicht die vorzugsweise geringe Spaltbreite, da das Gleitelement in die genannte Vertiefung des Stators eingesetzt werden kann. Mit anderen Worten kann für den Aktor eine besonders geringe Spaltbreite konstruktiv gewählt werden und gleichzeitig ein mechanisch stabiles Gleitelement für die Gleitlagerung des Ankers verwendet werden.

Gemäß einem weiteren Aspekt wird die eingangs genannte Aufgabe durch ein Kraftfahrzeug gelöst, das einen Fahrzeugrahmen, einen Motor und ein Motorlager umfasst, das eine lagernde Verbindung zwischen dem Motor und dem Fahrzeugrahmen herstellt, wobei das Motorlager durch das erfindungsgemäße Hydrolager, insbesondere nach einem der vorhergehenden Ausgestaltungen, ausgebildet ist. Dabei gelten Merkmale, Details und Vorteile, die im Zusammenhang mit dem erfindungsgemäßen Hydrolager beschrieben sind, selbstverständlich auch im Zusammenhang mit dem erfindungsgemäßen Kraftfahrzeug und jeweils umgekehrt, so dass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine erste Ausführungsform des Hydrolagers in einer schematischen Querschnittsdarstellung,
- Fig. 2: eine zweite Ausführungsform des Hydrolagers in einer weiteren schematischen Querschnittsdarstellung,
- Fig. 3: eine dritte Ausführungsform des Hydrolagers in einer weiteren schematischen Querschnittsdarstellung, und
- Fig. 4: eine vorteilhafte Ausgestaltung des Linearaktors in einer schematischen Querschnittsdarstellung.

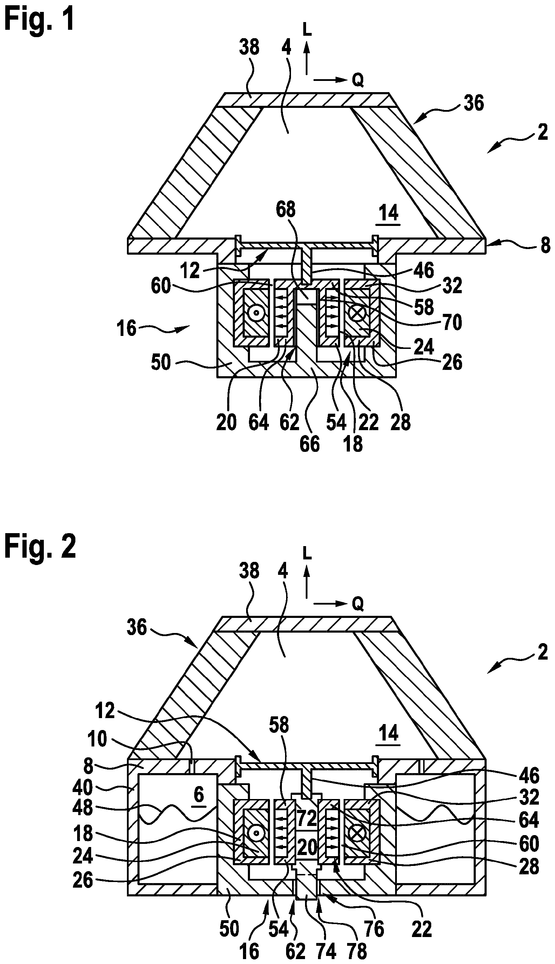

Aus der Figur 1 ist ein Hydrolager 2 zu erkennen. Das Hydrolager 2 umfasst eine als Gummielement ausgestaltete Tragfeder 36. Diese Tragfeder 36 ist für gewöhnlich als Hohlkörper ausgebildet, wobei die Oberseite der Tragfeder 36 eine Abdeckung 38 aufweist. An der Abdeckung 38 ist zumeist ein Anschlusselement (nicht dargestellt) zur Befestigung eines Motors angebracht. In einer einfachen Ausgestaltung handelt es sich bei dem Anschlusselement um einen Gewindebolzen, der mit dem Motor verschraubt werden kann. An der Unterseite der Tragfeder 36 schließt die Trennwand 8 an. Zwischen der Tragfeder 36, der Abdeckung 38 und der Trennwand 8 bildet sich die Arbeitskammer 4 aus. Die Arbeitskammer 4 ist mit einer Hydraulikflüssigkeit gefüllt. Hierbei handelt es sich vorzugsweise um ein Gemisch aus Öl und Wasser.

Zur Isolation von Schwingungen, insbesondere mit einer Frequenz von mehr als 20 Hz, weist das Hydrolager 2 eine Steuermembran 12 auf. Diese Steuermembran 12 ist der Trennwand 8 zugeordnet. Die Steuermembran 12 kann dazu von Trennwand 8 selbst gebildet sein oder in die Trennwand 8 eingebracht sein. So kann die Trennwand 8 die Steuermembran 12 einfassen. Die Steuermembran 12 ist in Längsrichtung L des Hydrolagers 2 elastisch verformbar ausgestaltet. Entsprechend ihrer elastischen Verformbarkeit in Längsrichtung L vergrößert oder verkleinert sich das Arbeitskammervolumen 14 der Arbeitskammer 4. Diese Verformbarkeit der Steuermembran 12 wird vorteilhaft genutzt, um höherfrequente Schwingungen zu isolieren. Dazu ist die Steuermembran 12 an ihrer von der Arbeitskammer 4 abgewandten Seite mechanisch mit einem Anker 20 eines elektromagnetischen Linearaktors 16 des Hydrolagers 2 verbunden. Die Steuermembran 12 kann also eine Lagerstelle für den Anker 20 bilden. Insbesondere ist die Steuermembran 12 für die Aufnahme von Querkräften ausgestaltet. Der Linearaktor 16 weist außerdem einen Stator 18 auf, zudem der Anker 20 beweglich gelagert angeordnet ist. Der Stator 18 ist mit seinem Statorgehäuse 50 an der Trennwand 8 und/oder an einem Basisgehäuse (hier nicht dargestellt) des Hydrolagers 2 befestigt oder von dem Basisgehäuse, zumindest teilweise, gebildet.

Wie aus der Figur 1 zu erkennen ist, weist der Stator 18 mindestens eine elektrische Spule 24 auf. Zur Bündelung eines Spulenmagnetfelds wird die Spule 24 von einem Leitelement 26 aus ferromagnetischen Material umgriffen, wobei deren Kragen 28, 32 zu dem Anker 20 zeigen. Der Anker 20 umfasst mindestens einen Permanentmagneten 22, der wiederum von einem ferromagnetischen Leitelement 64 des Ankers 20 umgriffen ist, wobei die Kragen 54, 58 des Leitelements 64 zu dem Stator 18 zeigen. In Querrichtung Q sind der Stator 18 und der Anker 20 durch einen Luftspalt 60 voneinander beanstandet. Sofern der elektromagnetische Aktor 16 einen zumindest im Wesentlichen rotationssymmetrischen Aufbau aufweist, ist der Luftspalt 60 ringförmig. Somit können der Stator 18 und der Anker 20 jeweils eine zylindrische Form aufweisen.

Außerdem ist aus der Figur 1 eine vorteilhafte Ausgestaltung des erfindungsgemäßen Hydrolagers 2 zu erkennen, bei der der Anker 20 mittels eines mechanischen Ankerstößels 46, der dem Anker 20 zugeordnet ist, mit der Steuermembran 12 mechanisch verbunden ist. Vorzugsweise ist der Ankerstößel 46 mit dem übrigen Anker 20 kraftschlüssig, formschlüssig und/oder stoffschlüssig verbunden. So kann der Ankerstößel 46 mit dem übrigen Anker 20 verschraubt sein.

Um eine Auslenkung des Ankers 20 in Längsrichtung L zu bewirken, wird die Spule 24 bestromt. Dabei entsteht das Spulenmagnetfeld, welches durch die Leitelemente 26, 64 gebündelt wird, so dass kreisförmige Magnetfeldlinien entstehen. Diese führen auch durch die beiden Kragen 54, 58. Benachbart zu den Kragen 54, 58 ist der Permanentmagnet 22 angeordnet, der eine Magnetfeldausrichtung in Querrichtung Q aufweist. Deshalb wird das gebündelte Spulenmagnetfeld bei einer Bestromung der Spule 24 in dem unteren Kragen 54 durch ein Permanentmagnetfeld des Permanentmagneten 22 konstruktiv überlagert, wohingegen das gebündelte Spulenmagnetfeld in dem oberen Kragen 58 durch das Permanentmagnetfeld des Permanentmagneten 22 destruktiv überlagert wird, oder umgekehrt. Je nach Ausgestaltung der genannten Überlagerung erfolgt eine Bewegung des Ankers 20 in längsaxiale Richtung L nach oben oder nach unten.

Um zu gewährleisten, dass der Anker 20 die gewünschte Bewegung ausschließlich in Längsrichtung L ausführt, ist es aus dem Stand der Technik bekannt, den Anker 20 an seiner Oberseite durch eine obere Führungsfeder und an seiner Unterseite durch eine untere Führungsfeder an dem Stator 18 zu befestigen. Die beiden Führungsfedern verhindern, dass der Anker 20 eine Bewegung in Querrichtung Q ausführen kann. Dazu sind die Führungsfedern mit einer hohen Steifigkeit auszugestalten. Diese hohe Steifigkeit hat jedoch bei einer Bewegung des Ankers in Längsrichtung den Nachteil, dass der Anker die Führungsfedern in Längsrichtung verbiegen muss, so dass entsprechende Reaktionskräfte auf den Anker wirken. Diese bei einer Bewegung des Ankers auftretenden Kräfte verursachen eine Verlustleistung, die nicht zur Auslenkung der Steuermembran 12 dient.

Um die genannte Verlustleistung zu vermeiden oder zumindest deutlich zu verkleinern und zugleich die Bewegungsrichtung des Ankers 20 auf eine Bewegungsrichtung in Längsrichtung L zu beschränken, ist der Anker 20 erfindungsgemäß mittels einer Gleitlagerung 62 gelagert. Die Gleitlagerung 62 weist dazu einen Freiheitsgrad in Längsrichtung L auf. Sie kann deshalb Kräfte in Querrichtung Q übertragen. Durch die mechanische Verbindung des Ankers 20 zu der Steuermembran 12 kann eine Führungsgenauigkeit des Ankers in Längsrichtung verbessert werden, insbesondere wenn die Steuermembran 12 zur Aufnahme von Kräften in Querrichtung Q ausgestaltet ist. Wie aus der Figur 1 hervorgeht, weist das Statorgehäuse 50 des Stators 18 einen Führungsbolzen 66 auf, der in eine Bohrung 68 des Ankers 20 einfasst. Zwischen dem Führungsbolzen 66 und der Bohrung 68 bildet sich die Gleitlagerung 62 aus. Vorzugsweise ist zwischen dem Führungsbolzen 66 und einer radial innenseitigen Wandung der Bohrung 68 ein Gleitelement 70 eingebracht, dass ein Teil der Gleitlagerung 62 bildet. Die Gleitlagerung 62 gewährleistet somit, dass der Anker 20 auch bei einer Auslenkung in Längsrichtung L einen radial außenseitigen Abstand, insbesondere gekennzeichnet durch den Luftspalt 60, zu dem Stator 18 aufweist.

Die Gleitlagerung 62 weist besonders bevorzugt einen sehr kleinen Reibungskoeffizienten auf, so dass eine Verlustleistung, die bei einer Bewegung des Ankers 20 in Längsrichtung L durch die Reibung entsteht, vernachlässigbar klein ist. Unter dieser Annahme sind für den Aktor 16 keine zusätzlichen Leistungsreserven konstruktiv zu berücksichtigen, die sonst bei bekannten Aktoren notwendig wären, um möglichst große Auslenkung in Längsrichtung L auszuführen. Deshalb kann der erfindungsgemäße Aktor 16 insgesamt kompakter und kleiner ausgebildet sein, was zudem eine Gewichtsreduzierung des Aktors 16 beziehungsweise des Hydrolagers 2 bietet. Wie aus der Figur 1 außerdem hervorgeht, kann der zur Verfügung stehende Bauraum sehr effizient genutzt werden, da der Führungsbolzen 66 und die Bohrung 68 zumindest im Wesentlichen keinen zusätzlichen Bauraum einnehmen. Aufgrund der zuvor genannten, geringen Reibung der Gleitlagerung 62 weist das Hydrolager 2 beziehungsweise der Aktor 16 eine hohe Lebensdauer auf.

In der Figur 2 ist eine weitere Ausgestaltung des Hydrolagers 2 schematisch dargestellt. Das Hydrolager 2 ist im Wesentlichen baugleich zu dem zuvor beschriebenen Hydrolager 2. Es gelten deshalb die analogen Erläuterungen, Merkmale und/oder Vorteile. Das Hydrolager 2 aus der Figur 2 unterscheidet sich jedoch in der Anordnung der Gleitlagerung 62. Außerdem ist für das Hydrolager 2 eine Ausgleichskammer 6 vorgesehen, die mittels eines Drosselkanals 10 mit der Arbeitskammer 4 hydraulisch verbunden ist. Hierzu schließt in Längsrichtung L unterhalb der Trennwand 8 das hohlzylindrische Basisgehäuse 40, das auch als Hydrolagergehäuse 40 bezeichnet wird, an, dessen Innenraum durch einen flexiblen Trennkörper 48, der auch als Rollmembran bezeichnet wird, unterteilt ist. Der von der Trennwand 8, dem Trennkörper 48, dem Statorgehäuse 50 und dem Basisgehäuse 40 eingeschlossene Raum bildet die Ausgleichskammer 6 des Hydrolagers 2. Die Ausgleichskammer 6 ist bevorzugt ebenfalls mit Hydraulikflüssigkeit gefüllt. Sie kann ebenfalls ein Gemisch aus Öl und Wasser sein. Aus der Figur 2 ist somit zu entnehmen, dass die Trennwand 8 zwischen der Arbeitskammer 4 und der Ausgleichskammer 6 angeordnet ist. Zur verbesserten Dämpfung von niederfrequenten Schwingungen, die von dem Motor über die Abdeckung 38 auf die Tragfeder 36 und somit auch auf ein Arbeitskammervolumen 14 der Arbeitskammer 4 wirken, ist der zwischen der Arbeitskammer 4 und der Ausgleichskammer 6 ausgebildeter Drosselkanal 10 zum Austausch von Hydraulikflüssigkeit vorgesehen. Wird die Tragfeder 36 durch die Schwingungen gestaucht, führt dies zu einer Erhöhung des Drucks der Hydraulikflüssigkeit in der Arbeitskammer 4 und/oder zu einer Verkleinerung des Arbeitskammervolumens 14 der Arbeitskammer 4. In beiden Alternativen erfolgt sodann ein Volumenstrom der Hydraulikflüssigkeit aus der Arbeitskammer 4 durch den Drosselkanal 10 in die Ausgleichskammer 6. Dabei entsteht in dem Drosselkanal 10 Dissipation, so dass die auf die Tragfeder 36 einwirkenden Schwingungen gedämpft werden.

Außerdem ist der Figur 2 eine weitere Ausführungsform der Gleitlagerung 62 zu entnehmen. Dafür weist der Anker 20 einen Basiskörper 72 auf, an dem radial außenseitig das Leitelement 64 mit dem Permanentmagneten 22 angeordnet ist. Zu der einen Stirnseite des Basiskörpers 72 schließt der Ankerstößel 46 an, an dem die Steuermembran 12 befestigt ist. Zu der gegenüberliegenden Stirnseite weist der Basiskörper 72 einen Gleitlagerungsabschnitt 74 auf. Der Gleitlagerungsabschnitt 74 fasst dabei in eine Bohrung 76 des Statorgehäuses 50. In die Bohrung 76 kann eine Hülse, insbesondere eine Lagerhülse, eingesetzt oder eingepresst sein. Zwischen dem Gleitlagerungsabschnitt 74 und der radial innenseitigen Wandung der Bohrung 76 beziehungsweise der Hülse ist ein Gleitelement 78 eingebracht, so dass sich die Gleitlagerung 62 im Übergang vom Gleitlagerungsabschnitt 74 zu der Bohrung 76 ausbildet. Durch die Ausgestaltung der Gleitlagerung 62 wird kein zusätzlicher Bauraum benötigt. Vielmehr werden die Bauteile des elektromagnetischen Linearaktors 16 in der Weise konstruktiv verändert, dass eine Gleitlagerung 62 für den Anker 20 in das Hydrolager 2 integriert wird. Außerdem wird auf die zu Fig. 1 erläuterten Vorteile der Gleitlagerung 62 verwiesen, womit die Nachteile eines begrenzten Aktorwegs und der Leistungsverluste durch die Verbiegung der Membranfedern bei bekannten Lagerungen des Ankers 20 gegenüber dem Stator 18 überwunden werden.

Alternativ kann der Gleitlagerungsabschnitt 74 auch in eine Bohrung des Basisgehäuses 40 einfassen. Hierbei ergeben sich analoge Effekte und Vorteile.

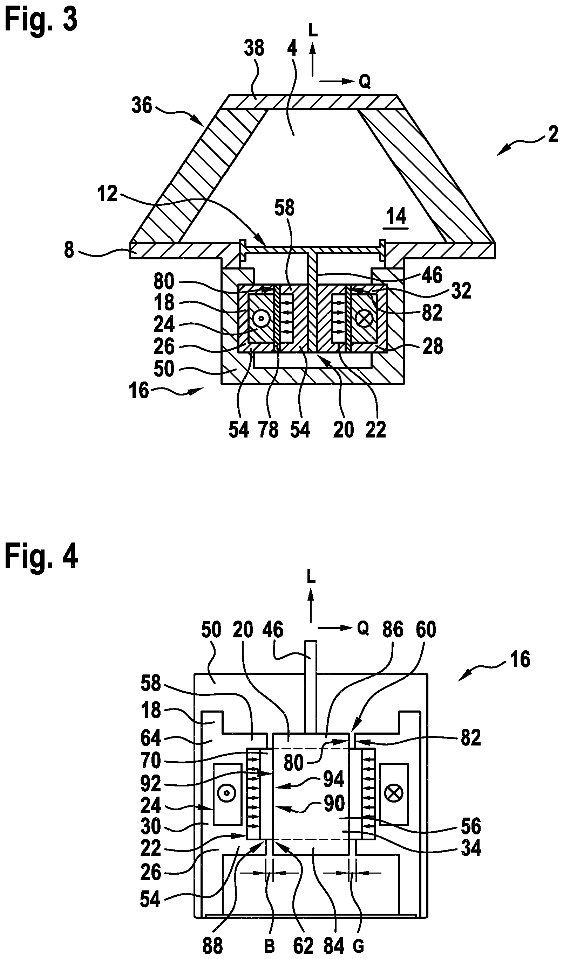

In der Figur 3 ist eine weitere Ausgestaltung des Hydrolagers 2 schematisch dargestellt. Das Hydrolager 2 ist im Wesentlichen baugleich zu den zuvor beschriebenen Hydrolagern 2. Es gelten deshalb die analogen Erläuterungen, Merkmale und/oder Vorteile. Das Hydrolager 2 aus der Figur 3 unterscheidet sich jedoch in der Anordnung der Gleitlagerung 62. Zuvor wurde erläutert, dass der Anker 20 radial außenseitig durch einen Luftspalt 60 von dem Stator 18 beanstandet ist. Für die Gleitlagerung 62, wie sie aus der Figur 3 zu entnehmen ist, ist in den Luftspalt 62 ein, insbesondere nichtmagnetisches, Leitelement 78 eingebracht. Das Leitelement 78 ist deshalb zwischen einer Ankerpolfläche 80 des Ankers 20 und einer Statorpolfläche 82 des Stators 18 angeordnet, so dass sich die Gleitlagerung 62 im Übergang von der Ankerpolfläche 80 zu der Statorpolfläche 82 ausbildet. Indem der ursprüngliche Luftspalt 60 nunmehr durch das Leitelement 78 gefüllt ist, wird kein zusätzlicher Bauraum für die Gleitlagerung 62 beansprucht. Deshalb ist ein derartiger Linearaktor 16 bzw. ein derartiges Hydrolager 2 besonders kompakt ausgebildet. Des Weiteren wird auf die zuvor erläuterten Vorteile und Effekte der Integration der Gleitlagerung 62 für den Anker 42 in das Hydrolager 2 verwiesen.

In der Figur 4 ist eine vorteilhafte Ausgestaltung des Linearaktors 16 schematisch dargestellt. Dieser Linearaktor 16 kann die zuvor genannten Linearaktoren 16 für ein Hydrolager 2 ersetzten. Der übrige Teil des Hydrolagers 2 ist im Wesentlichen baugleich zu den zuvor beschriebenen Hydrolagern 2. Es gelten deshalb die analogen Erläuterungen, Merkmale und/oder Vorteile.

Der in der Figur 4 dargestellte Linearaktor 16 unterscheidet sich von den zuvor erläuterten Linearaktoren 16 durch den Aufbau des Stators 18, des Ankers 20 und der Gleitlagerung 62. Im Folgenden wird zunächst auf den Aufbau des Stators 18 und des Ankers 20 eingegangen. Daraufhin erfolgt die Erläuterung der besonderen Ausgestaltung der Gleitlagerung 62 und dem dadurch entstehenden Synergieeffekt mit der besonderen Ausgestaltung des Stators 18 und des Ankers 20.

Der Linearaktor 16 umfasst einen Stator 18 mit einem Statorgehäuse 50, mehreren Permanentmagneten 22 und einer Spule 24. Der Linearaktor 16 ist symmetrisch zu einer Mittenachse in Längsrichtung L ausgebildet. Das Leitelement 26 des Linearaktors 16 ist ein Teil des Stators 18. Das Leitelement 26 dient zur Bündelung eines Spulenmagnetfelds der Spule 24. Dazu weist das Leitelement 26 einen unteren Kragen 28 und einen oberen Kragen 32 auf, die sich jeweils von dem Längsabschnitt 30 in Querrichtung Q erstrecken. Das Leitelement 26 des Linearaktors 16 aus Figur 4 ist im Querschnitt also C-förmig ausgebildet. In die entsprechende Öffnung, die auch als Aufnahmebereich bezeichnet wird, werden ein Permanentmagnet 22 und eine Spule 24 eingebracht, wobei der Permanentmagnet 22 und die Spule 24 in Querrichtung Q hintereinander angeordnet sind. In Querrichtung Q betrachtet sind der Permanentmagnet 22 ankerseitig und die Spule 24 längsabschnittseitig angeordnet. Deshalb übergreift das Leitelement 26 sowohl den Permanentmagneten 22 als auch die Spule 24. In Längsrichtung L erstreckt sich der Permanentmagnet 22 über die gesamte Längserstreckung der Spule 22 und vorzugsweise darüber hinaus. Mit anderen Worten grenzt der Permanentmagnet 22 sowohl an dem unteren Kragen 28 als auch an dem oberen Kragen 32 an. Der untere Kragen 28 bildet mit der zugehörigen, dem Anker 20 zugewandten Seite eine Statorpolfläche 82, insbesondere eine untere Statorpolfläche, aus. Entsprechendes gilt für den oberen Kragen 32, der mit der zugehörigen, dem Anker 20 zugewandten Seite eine weitere Statorpolfläche 82, insbesondere eine obere Statorpolfläche, ausbildet. Erfolgt nun eine Bestromung der Spule 26, entsteht ein Spulenmagnetfeld mit entsprechend ringförmigen Magnetfeldlinien, die von dem Leitelement 26 und dem vom Anker 20 gebildeten Joch 34 gebündelt werden. Aufgrund der an beiden Kragen 28, 32 angrenzenden Anordnung des Permanentmagneten 22 wird das Magnetfeld in dem unteren Kragen 28 konstruktiv und in dem oberen Kragen 32 destruktiv überlagert, oder umgekehrt. Der Anker 20 erfährt deshalb eine Zugkraft in Längsrichtung L.

Der erfindungsgemäße Anker 20 aus oder mit ferromagnetischen Material bildet, wie zuvor erwähnt, ein Joch 34 für das Leitelement 26. Hierzu bedarf der Anker 20 weder eines Permanentmagneten noch einer Spule. Der Anker 20 ist deshalb frei von Permanentmagneten und/oder Spulen. In der Praxis hat es sich als zweckmäßig erwiesen, wenn sich das vom Anker 20 gebildete Joch 34 in Längsrichtung L von einem unteren Abschnitt 84 über einen Mittenabschnitt 56 zu einem oberen Abschnitt 86 erstreckt. In einer Ruheposition des Ankers 20 ist der obere Abschnitt 84 gegenüberliegend zu dem oberen Kragen 32 und der untere Abschnitt 86 gegenüberliegend zu dem unteren Kragen 28 ausgerichtet. Mit anderen Worten sind der obere Abschnitt 84 und der obere Kragen 32 in einer gemeinsamen, oberen Ebene und der untere Abschnitt 86 und der untere Kragen 28 in einer gemeinsamen unteren Ebene angeordnet. Der untere Abschnitt 84 des Ankers 20 bildet mit der zugehörigen, dem Stator 18 zugewandten Seite eine Ankerpolfläche 80, insbesondere eine untere Ankerpolfläche, aus. Entsprechendes gilt für den oberen Abschnitt 86, der mit der zugehörigen, dem Stator 18 zugewandten Seite eine weitere Ankerpolfläche 80, insbesondere eine obere Ankerpolfläche, ausbildet. Der untere Ankerabschnitt 84, der obere Ankerabschnitt 86 sowie die Kragen 28, 32 bestimmen somit einen Luftspalt 60, der sich im Bereich zwischen den Ankerpolflächen 80 und den Statorpolflächen 82 in Querrichtung Q ausbildet. Dabei weist der Luftspalt 60 in Querrichtung Q eine Spaltbreite B auf.

In der Ausgestaltung des Linearaktors 16, wie sie in Figur 3 dargestellt ist, wurde in den Luftspalt 60 das Gleitelement 70 eingebracht, um eine Gleitlagerung 62 für den Anker 20 zu schaffen. In dieser Ausgestaltung bestimmt die Erstreckung des Gleitelements 70 in Querrichtung Q, also die Gleitelementbreite G, die Spaltbreite B des entsprechenden Spalts 60. Für die Ausgestaltung des Linearaktors 16, wie sie in der Figur 4 dargestellt ist, wird jedoch eine weitere vorteilhafte Anordnung des Gleitelements 70 vorgeschlagen.

Aus der Figur 4 ist zu entnehmen, dass das Gleitelement 70 in Längsrichtung L zwischen dem unteren Kragen 54 und dem oberen Kragen 58 in eine Vertiefung 88 des Stators 18 einfasst. Das Gleitelement 70 ist also in Längsrichtung L des Linearaktors 16 zwischen dem oberen Kragen 58 und dem unteren Kragen 54 angeordnet. Damit überdeckt das Gleitelement 70 nicht die Statorpolflächen 82 des Stators 18. Somit können die Statorpolflächen 82 und die Ankerpolflächen 80 in einer Ruheposition des Linearaktors 16 paarweise gegenüberliegend zueinander angeordnet sein. Wie zuvor erläutert, werden die Ankerpolflächen 80 an einer jeweiligen, dem Stator 18 zugewandten Seite des unteren Ankerabschnitts 84 bzw. des oberen Ankerabschnitts 86 gebildet. Zwischen dem unteren Ankerabschnitt 84 und dem oberen Ankerabschnitt 86 ist der Mittenabschnitt 56 des Ankers 20. Die dem Stator 18 zugewandte Seite des Mittenabschnitts 56 des Ankers 20 bildet dabei eine Lagerfläche 90 der Gleitlagerung 62. Der Anker 20 liegt mit der Lagerfläche 90 an dem Gleitelement 70 unmittelbar an. Das Gleitelement 70 bildet deshalb mit der dem Anker 20 zugewandten Seite eine Gegenlagerfläche 92 der Gleitlagerung 62.

Um zu verhindern, dass die Ankerpolflächen 80 auf die Statorpolflächen 82 treffen und dabei eine unerwünschte mechanische Reibung verursachen, ragt das Gleitelement 70 in Querrichtung Q über die von den Kragen 54, 58 gebildeten Statorpolflächen 82 hinaus. Die Höhe in Querrichtung Q, mit der das Gleitelement 70 über die Statorpolflächen 82 hinaus ragt, bestimmt zugleich die Spaltbreite B des Luftspalt 60. Wie aus der Figur 4 weiter zu entnehmen ist, fasst jedoch weiterhin ein Teil des Gleitelements 70 in die Vertiefung 88 ein, so dass die Spaltbreite B kleiner als die Gleitelementbreite G ist. Dies hat den weiteren Vorteil, dass das Gleitelement 70 eine ausreichend große Gleitelementbreite G aufweisen kann, die für eine ausreichend hohe strukturelle Stabilität des Gleitelements 70 sorgt. Trotz der höheren Gleitelementbreite G kann der Luftspalt 60 besonders klein gehalten werden, was den magnetischen Widerstand am Luftspalt 60 reduziert. Die Anordnung des Gleitelements 70 zwischen den Kragen 54, 58 des Stators 18 mit einer teilweisen Einfassung in die Vertiefung 88 des Stators 18 ermöglicht also eine vorteilhafte Lagerung des Ankers 20 mit einer gleichzeitigen geringen Ausgestaltung des magnetischen Widerstands am Luftspalt 60.

Darüber hinaus ist der Figur 4 zu entnehmen, dass der untere Ankerabschnitt 54, der Mittenabschnitt 56 des Ankers 20 und der obere Ankerabschnitt 86 ununterbrochen ausgebildet sind. Dies ermöglicht eine besonders einfache Herstellung des Ankers 20. Darüber hinaus kann die Lagerfläche 90 der Gleitlagerung 62 und die für das Joch 34 vorgesehenen Ankerpolflächen 80 an einer gemeinsamen, ununterbrochenen Ankerseite 94 ausgebildet sein. Mit dieser Ausgestaltung kann ein besonders kompakter Aufbau des Linearaktors 16 gewährleistet werden. Denn bei einem Auslenken des Ankers 20 in Längsrichtung L kann der Anker 20 problemlos mit dem oberen Ankerabschnitt 86 oder dem unteren Ankerabschnitt 84 über die Gegenlagerfläche 92 gleiten. Dies gilt insbesondere dann, wenn die Ankerpolflächen 80 und die Lagerfläche 90 fluchtend zueinander ausgerichtet sind. Tritt nun eine entsprechende Auslenkung des Ankers 20 auf, verschiebt sich die vom Anker 20 gebildete Lagerfläche 90 bis in den oberen Ankerabschnitt 86 oder den unteren Ankerabschnitt 84. Entsprechendes gilt für die Ankerpolflächen 80, die nunmehr teilweise von dem Mittenabschnitt 54 des Ankers 20 gebildet sein können. Mit anderen Worten können die unterschiedlichen Abschnitte 54, 84, 86 des Ankers 20 Doppelfunktionen aufweisen und zugleich eine widerstandsgeringe Auslenkung des Ankers 20 ermöglichen.

### Bezugszeichenliste

### (Teil der Beschreibung)

- L: Längsrichtung
- Q: Querrichtung
- B: Spaltbreite
- G: Gleitelementbreite
- 2: Hydrolager
- 4: Arbeitskammer
- 6: Ausgleichskammer
- 8: Trennwand
- 10: Drosselkanal
- 12: Steuermembran
- 14: Arbeitskammervolumen
- 16: Linearaktor
- 18: Stator
- 20: Anker
- 22: Permanentmagnet
- 24: Spule
- 26: Leitelement
- 28: Kragen
- 30: Längsabschnitt
- 32: Kragen
- 34: Joch
- 36: Tragfeder
- 38: Abdeckung
- 40: Basisgehäuse
- 46: Ankerstößel
- 48: Trennkörper
- 50: Statorgehäuse
- 54: Kragen
- 56: Mittenabschnitt
- 58: Kragen
- 60: Luftspalt
- 62: Gleitlagerung
- 64: Leitelement
- 66: Führungsbolzen
- 68: Bohrung
- 70: Gleitelement
- 72: Basiskörper
- 74: Gleitlagerungsabschnitt
- 76: Bohrung
- 78: Gleitelement
- 80: Ankerpolfläche
- 82: Statorpolfläche
- 84: Unterer Abschnitt
- 86: Oberer Abschnitt
- 88: Vertiefung
- 90: Lagerfläche
- 92: Gegenlagerfläche
- 94: Ankerseite

## Patentansprüche

1. Hydrolager (2) mit
- einer Tragfeder (36),
- einer von der Tragfeder (36) zumindest teilweise umschlossenen Arbeitskammer (4), die mit einer Hydraulikflüssigkeit gefüllt ist,
- einer Steuermembran (12), die zur Veränderung eines Arbeitskammervolumens der Arbeitskammer (4) ausgebildet ist, und
- einem Aktor (16) zum Auslenken der Steuermembran (12),
- wobei der Aktor (16) einen Stator (18) und einen in Längsrichtung des Stators (18) beweglichen Anker (20) umfasst,
- wobei der Anker (20) mit der Steuermembran (12) mechanisch verbunden ist, und
- wobei der Anker (20) mittels einer Gleitlagerung (62) gelagert ist,
**dadurch gekennzeichnet, dass**
- der Aktor (16) ein elektromagnetischer Linearaktor (16) ist,
- wobei dem Anker (20) eine Lagerfläche der Gleitlagerung und dem Stator (18) oder dem Hydrolagergehäuse (40) eine Lagergegenfläche der Gleitlagerung (62) zugeordnet sind,
- wobei die Lagerfläche von einer zylindrischen Hülse des Ankers (20) und die Gegenlagerfläche von einem zylindrischen Führungsbolzen (66) des Stators (18) oder des Hydrolagergehäuses (40) gebildet werden, oder umgekehrt.

2. Hydrolager (2) nach dem vorhergehenden Anspruch, **dadurch gekennzeichnet, dass** das Hydrolager (2) eine Ausgleichskammer (6), eine Trennwand (8), die zwischen der Arbeitskammer (4) und der Ausgleichskammer (6) angeordnet ist, und einen zwischen der Arbeitskammer (4) und der Ausgleichskammer (6) ausgebildeten Drosselkanal (10) zum Austausch von Hydraulikflüssigkeit aufweist.

3. Hydrolager (2) nach einem der vorhergehenden Ansprüche, **dadurch gekennzeichnet, dass** der Anker (20) mittels der Gleitlagerung (62) in Längsrichtung L des Aktors (16) beweglich gelagert ist.

4. Hydrolager (2) nach einem der vorhergehenden Ansprüche, **dadurch gekennzeichnet, dass** die Gleitlagerung (62) im Übergang von einem dem Anker (20) zugeordneten Ankerstößel (46) und einem Hydrolagergehäuse (40) des Hydrolagers (2) ausgebildet ist.

5. Hydrolager (2) nach einem der vorhergehenden Ansprüche 1 bis 3, **dadurch gekennzeichnet, dass** die Gleitlagerung (62) im Übergang vom Anker (20) zum Stator (18), insbesondere dessen Statorgehäuse (50), ausgebildet ist.

6. Hydrolager (2) nach Anspruch 5, **dadurch gekennzeichnet, dass** zwischen einer Ankerpolfläche des Ankers (20) und einer Statorpolfläche des Stators (18) ein Spalt (60) ist, in den ein Gleitelement (78) der Gleitlagerung (62) eingebracht ist.

7. Hydrolager (2) nach einem der vorhergehenden Ansprüche, **dadurch gekennzeichnet, dass** der Anker (20) an einer zugehörigen, dem Stator (18) zugewandten Seite eine Lagerfläche (90) der Gleitlagerung (62) bildet, und an einer dem Anker (20) zugewandten Statorseite ein Gleitelement (70) der Gleitlagerung (62) befestigt ist, das mit einer zugehörigen, dem Anker (20) zugewandten Seite eine Gegenlagerfläche (92) der Gleitlagerung (62) bildet.

8. Hydrolager (2) nach dem vorhergehenden Anspruch, **dadurch gekennzeichnet, dass** der Stator (18) ein Leitelement (26) aus ferromagnetischem Material aufweist, und das Leitelement (26) einen sich in Längsrichtung L des Linearaktors (16) erstreckenden Längsabschnitt (30), einen sich in Querrichtung Q des Linearaktors (16) erstreckenden, unteren Kragen (54) und einen sich in Querrichtung Q des Linearaktors (16) erstreckenden, oberen Kragen (58) aufweist, der untere Kragen (54) von dem oberen Kragen (58) in Längsrichtung L beabstandet ist, wobei der untere Kragen (54) und der obere Kragen (58) jeweils an einer dem Anker (20) zugewandten Seite eine Statorpolfläche (82) bilden, und das Gleitelement (70) in Längsrichtung L des Linearaktors (16) zwischen dem oberen Kragen (58) und dem unteren Kragen (54) angeordnet ist.

9. Hydrolager (2) nach dem vorhergehenden Anspruch, **dadurch gekennzeichnet, dass** das Gleitelement (70) zwischen dem unteren Kragen (54) und dem oberen Kragen (58) in den Stator (18) einfasst.

10. Hydrolager (2) nach einem der vorhergehenden Ansprüche 8 bis 9, **dadurch gekennzeichnet, dass** das Gleitelement (70) in Querrichtung Q über die von den Kragen (54, 58) gebildeten Statorpolfächen (82) hinausragt.

11. Hydrolager (2) nach einem der vorhergehenden Ansprüche 8 bis 10, **dadurch gekennzeichnet, dass** der Stator (18) mindestens einen Permanentmagneten (22) und mindestens eine Spule (24) aufweist, das Leitelement (26) den mindestens einen Permanentmagneten (22) und/oder die mindestens eine Spule (26) übergreift, und der Anker (18) in Längsrichtung L ein Joch (34) aus oder mit ferromagnetischem Material für das Leitelement (26) bildet.

12. Hydrolager (2) nach einem der vorhergehenden Ansprüche 7 bis 11, **dadurch gekennzeichnet, dass** der Anker (20) frei von Permanentmagneten (22) und Spulen (24) ist.

13. Kraftfahrzeug mit
- einem Fahrzeugrahmen,
- einem Motor und
- einem Motorlager, das eine lagernde Verbindung zwischen dem Motor und dem Fahrzeugrahmen herstellt,
**dadurch gekennzeichnet, dass**
- das Motorlager durch ein Hydrolager (2) nach einem der vorhergehenden Ansprüche 1 bis 12 ausgebildet ist.

## Claims

1. Hydraulic bearing (2) with
- a suspension spring (36),
- a working chamber (4) which is enclosed at least partially by the suspension spring (36) and is filled with a hydraulic fluid,
- a control diaphragm (12) which is configured for changing a working chamber volume of the working chamber (4), and
- an actuator (16) for deflecting the control diaphragm (12),
- the actuator (16) comprising a stator (18) and an armature (20) which can be moved in the longitudinal direction of the stator (18),
- the actuator (20) being connected mechanically to the control diaphragm (12), and
- the armature (20) being mounted by means of a plain bearing (62),
**characterized in that**
- the actuator (16) is an electromagnetic linear actuator (16),
- the armature (20) being assigned a bearing face of the plain bearing, and the stator (18) or the hydraulic bearing housing (40) being assigned an opposite bearing face of the plain bearing (62),
- the bearing face being formed by a cylindrical sleeve of the armature (20), and the opposite bearing face being formed by a cylindrical guide pin (66) of the stator (18) or of the hydraulic bearing housing (40), or vice versa.

2. Hydraulic bearing (2) according to the preceding claim, **characterized in that** the hydraulic bearing (2) has an equalization chamber (6), a dividing wall (8) which is arranged between the working chamber (4) and the equalization chamber (6), and a throttle channel (10) which is configured between the working chamber (4) and the compensation chamber (6) for the exchange of hydraulic fluid.

3. Hydraulic bearing (2) according to either of the preceding claims, **characterized in that** the armature (20) is mounted by means of the plain bearing (62) such that it can be moved in the longitudinal direction L of the actuator (16).

4. Hydraulic bearing (2) according to one of the preceding claims, **characterized in that** the plain bearing (62) is configured at the transition from an armature plunger (46), assigned to the armature (20), and a hydraulic bearing housing (40) of the hydraulic bearing (2).

5. Hydraulic bearing (2) according to one of the preceding Claims 1 to 3, **characterized in that** the plain bearing (62) is configured at the transition from the armature (20) to the stator (18), in particular its stator housing (50).

6. Hydraulic bearing (2) according to Claim 5, **characterized in that** there is a gap (60) between an armature pole face of the armature (20) and a stator pole face of the stator (18), into which gap (60) a sliding element (78) of the plain bearing (62) is introduced.

7. Hydraulic bearing (2) according to one of the preceding claims, **characterized in that** the armature (20) forms a bearing face (90) of the plain bearing (62) on an associated side which faces the stator (18), and a sliding element (70) of the plain bearing (62) is fastened to a stator side which faces the armature (20), which sliding element (70) forms an opposite bearing face (92) of the plain bearing (62) with an associated side which faces the armature (20).

8. Hydraulic bearing (2) according to the preceding claim, **characterized in that** the stator (18) has a conductive element (26) made from ferromagnetic material, and the conductive element (26) has a longitudinal section (30) which extends in the longitudinal direction L of the linear actuator (16), a lower collar (54) which extends in the transverse direction Q of the linear actuator (16), and an upper collar (58) which extends in the transverse direction Q of the linear actuator (16), the lower collar (54) being spaced apart in the longitudinal direction L from the upper collar (58), the lower collar (54) and the upper collar (58) forming a stator pole face (82) in each case on a side which faces the armature (20), and the sliding element (70) being arranged between the upper collar (58) and the lower collar (54) in the longitudinal direction L of the linear actuator (16).

9. Hydraulic bearing (2) according to the preceding claim, **characterized in that** the sliding element (70) forms a surround into the stator (18) between the lower collar (54) and the upper collar (58).

10. Hydraulic bearing (2) according to either of the preceding Claims 8 and 9, **characterized in that** the sliding element (70) protrudes in the transverse direction Q beyond the stator pole faces (82) which are formed by the collars (54, 58).

11. Hydraulic bearing (2) according to one of the preceding Claims 8 to 10, **characterized in that** the stator (18) has at least one permanent magnet (22) and at least one coil (24), the conductive element (26) engages over the at least one permanent magnet (22) and/or the at least one coil (26), and the armature (18) forms, in the longitudinal direction L, a yoke (34) which is made from or comprises ferromagnetic material for the conductive element (26).

12. Hydraulic bearing (2) according to one of the preceding Claims 7 to 11, **characterized in that** the armature (20) is free from permanent magnets (22) and coils (24).

13. Motor vehicle with
- a vehicle frame,
- an engine, and
- an engine mounting which establishes a mounting connection between the engine and the vehicle frame,
**characterized in that**
- the engine mounting is configured by way of a hydraulic bearing (2) according to one of the preceding Claims 1 to 12.

## Revendications

1. Palier hydraulique (2) comprenant
- un ressort porteur (36),
- une chambre de travail (4) au moins partiellement entourée par le ressort porteur (36), qui est remplie d'un liquide hydraulique,
- une membrane de commande (12), qui est réalisée pour modifier un volume de chambre de travail de la chambre de travail (4), et
- un actionneur (16) pour dévier la membrane de commande (12),
- l'actionneur (16) comprenant un stator (18) et un induit (20) mobile dans la direction longitudinale du stator (18),
- l'induit (20) étant relié mécaniquement à la membrane de commande (12), et
- l'induit (20) étant monté au moyen d'un palier lisse (62),
**caractérisé en ce que**
- l'actionneur (16) est un actionneur linéaire électromagnétique (16),
- une surface de palier du palier lisse étant associée à l'induit (20) et une contre-surface de palier du palier lisse (62) étant associée au stator (18) ou au boîtier de palier hydraulique (40),
- la surface de palier étant formée par une gaine cylindrique de l'induit (20) et la contre-surface de palier par un boulon de guidage cylindrique (66) du stator (18) ou du boîtier de palier hydraulique (40), ou inversement.

2. Palier hydraulique (2) selon la revendication précédente, **caractérisé en ce que** le palier hydraulique (2) présente une chambre d'équilibrage (6), une paroi de séparation (8), qui est agencée entre la chambre de travail (4) et la chambre d'équilibrage (6), et un canal d'étranglement (10) réalisé entre la chambre de travail (4) et la chambre d'équilibrage (6) pour l'échange de fluide hydraulique.

3. Palier hydraulique (2) selon l'une quelconque des revendications précédentes, **caractérisé en ce que** l'induit (20) est monté mobile dans la direction longitudinale L de l'actionneur (16) au moyen du palier lisse (62).

4. Palier hydraulique (2) selon l'une quelconque des revendications précédentes, **caractérisé en ce que** le palier lisse (62) est réalisé dans la transition entre un poussoir d'induit (46) associée à l'induit (20) et un boîtier de palier hydraulique (40) du palier hydraulique (2).

5. Palier hydraulique (2) selon l'une quelconque des revendications 1 à 3 précédentes, **caractérisé en ce que** le palier lisse (62) est réalisé dans la transition entre l'induit (20) et le stator (18), notamment son boîtier de stator (50).

6. Palier hydraulique (2) selon la revendication 5, **caractérisé en ce qu'**entre une surface de pôle d'induit de l'induit (20) et une surface de pôle de stator du stator (18), se trouve une fente (60), dans laquelle un élément de glissement (78) du palier lisse (62) est introduit.

7. Palier hydraulique (2) selon l'une quelconque des revendications précédentes, **caractérisé en ce que** l'induit (20) forme, sur un côté correspondant tourné vers le stator (18), une surface de palier (90) du palier lisse (62), et un élément de glissement (70) du palier lisse (62) est fixé sur un côté du stator tourné vers l'induit (20), qui forme, avec un côté correspondant tourné vers l'induit (20), une contre-surface de palier (92) du palier lisse (62).

8. Palier hydraulique (2) selon la revendication précédente, **caractérisé en ce que** le stator (18) présente un élément conducteur (26) en matériau ferromagnétique, et l'élément conducteur (26) présente une section longitudinale (30) s'étendant dans la direction longitudinale L de l'actionneur linéaire (16), une collerette inférieure (54) s'étendant dans la direction transversale Q de l'actionneur linéaire (16) et une collerette supérieure (58) s'étendant dans la direction transversale Q de l'actionneur linéaire (16), la collerette inférieure (54) étant espacée de la collerette supérieure (58) dans la direction longitudinale L, la collerette inférieure (54) et la collerette supérieure (58) formant chacune une surface de pôle de stator (82) sur un côté tourné vers l'induit (20), et l'élément de glissement (70) étant agencé entre la collerette supérieure (58) et la collerette inférieure (54) dans la direction longitudinale L de l'actionneur linéaire (16).

9. Palier hydraulique (2) selon la revendication précédente, **caractérisé en ce que** l'élément de glissement (70) s'insère dans le stator (18) entre la collerette inférieure (54) et la collerette supérieure (58).

10. Palier hydraulique (2) selon l'une quelconque des revendications 8 à 9 précédentes, **caractérisé en ce que** l'élément de glissement (70) fait saillie dans la direction transversale Q au-delà des surfaces de pôle de stator (82) formées par les collerettes (54, 58).

11. Palier hydraulique (2) selon l'une quelconque des revendications 8 à 10 précédentes, **caractérisé en ce que** le stator (18) présente au moins un aimant permanent (22) et au moins une bobine (24), l'élément conducteur (26) recouvre l'au moins un aimant permanent (22) et/ou l'au moins une bobine (26), et l'induit (18) forme dans la direction longitudinale L une culasse (34) en ou comprenant un matériau ferromagnétique pour l'élément conducteur (26).

12. Palier hydraulique (2) selon l'une quelconque des revendications 7 à 11 précédentes, **caractérisé en ce que** l'induit (20) est exempt d'aimants permanents (22) et de bobines (24).

13. Véhicule automobile comprenant
- un châssis de véhicule,
- un moteur et
- un palier de moteur, qui établit une liaison de montage entre le moteur et le châssis de véhicule,
**caractérisé en ce que**
- le palier de moteur est réalisé par un palier hydraulique (2) selon l'une quelconque des revendications 1 à 12 précédentes.
